# EUROPEAN PATENT APPLICATION

(11) **EP 3 006 603 A1**
(43) Date of publication of application: **13.04.2016**
(21) Application number: 14804878.8
(22) Date of filing: 13.03.2014
(51) Int. Cl.: C25B 9/00, B01J 35/02, C01B 13/02, C25B 1/04, C25B 3/04, C25B 11/06, H01L 51/42

(54) **PHOTOCHEMICAL REACTION DEVICE AND THIN FILM**

(30) Priority: 31.05.2013 JP 2013116264
(71) Applicant: Kabushiki Kaisha Toshiba, Minato-ku Tokyo 105-8001 (JP)
(72) Inventor: HUANG, Chingchun, Tokyo 105-8001 (JP); MIKOSHIBA, Satoshi, Tokyo 105-8001 (JP); KITAGAWA, Ryota, Tokyo 105-8001 (JP); ONO, Akihiko, Tokyo 105-8001 (JP); TAMURA, Jun, Tokyo 105-8001 (JP); KUDO, Yuki, Tokyo 105-8001 (JP)
(74) Representative: Hoffmann Eitle
(86) International application number: PCT/JP2014/056715
(87) International publication number: WO 2014/192364

(57) **Abstract**

According to one embodiment, a photochemical reaction device according to the present embodiment includes an oxidation reaction portion that generates oxygen by oxidizing water, a reduction reaction portion that generates a carbon compound by reducing carbon dioxide and is arranged in a first solution containing amine molecules in which the carbon dioxide is absorbed, a semiconductor element that separates charges by light energy and is electrically connected to the oxidation reaction portion and the reduction reaction portion, and a thin film formed between the oxidation reaction portion and the first solution to inhibit transmission of the amine molecules from the first solution to the oxidation reaction portion.

## Description

### Technical Field

Embodiments described herein relate generally to a photochemical reaction device and a thin film.

### Background Art

From the viewpoint of energy problems and environmental issues, efficient reduction of carbon dioxide (CO₂) by light energy such as in plants is demanded. Plants use a system called a Z scheme that excites light energy in two stages. Plants synthesize cellulose and sugars by obtaining electrons from water (H₂O) and reducing carbon dioxide through a photochemical reaction of such a system.

However, the technology to obtain electrons from water and decompose CO₂ by an artificial photochemical reaction without using a sacrificial reagent achieves very low efficiency.

For example, Patent Literature 1 discloses a photochemical reaction device including an oxidation reaction electrode that generates oxygen (O₂) by oxidizing H₂O and a reduction reaction electrode that generates carbon compounds by reducing CO₂. The oxidation reaction electrode uses a semiconductor photocatalyst and obtains a potential to oxidize H₂O from light energy. The reduction reaction electrode is provided with a metal complex reduction catalyst that reduces CO₂ on the surface of the semiconductor photocatalyst and is connected to the oxidation reaction electrode by an electric wire. The reduction reaction electrode obtains a potential to reduce CO₂ from light energy and reduces CO₂ to generate formic acid (HCOOH). Also, photoexcited electrons are transferred from the oxidation reaction electrode to the reduction reaction electrode and photoexcited holes generated in the reduction reaction electrode and transferred photoexcited electrons are smoothly combined. A Z-scheme type artificial photosynthesis system imitating plants is used to obtain a potential needed to reduce CO₂ and oxidize H₂O by a photocatalyst using visible radiation.

However, according to Patent Literature 1, the solar energy conversion efficiency is about 0.04% and very low. This is because the energy efficiency of semiconductor photocatalysts that can be excited by visible radiation is low. In addition, the reduction reaction electrode is connected to the oxidation reaction electrode by an electric wire and thus, the efficiency to derive electricity (current) is reduced by the resistance of the wire, resulting in lower efficiency.

Patent Literature 2 discloses an artificial photosynthesis system including a semiconductor photocatalyst that obtains oxygen by oxidizing water, a semiconductor photocatalyst that obtains hydrogen by reducing water, and a redox couple that conducts electrons between the two semiconductor photocatalysts. In this system, two kinds of semiconductor photocatalyst particles are dispersed in one solution and each semiconductor photocatalyst undergoes an oxidation reaction or a reduction reaction by obtaining a desired potential from light energy. This is also an example of the Z-scheme type artificial photosynthesis system imitating plants. However, like Patent Literature 1, the light energy utilization rate of semiconductor photocatalysts according to the conventional technology is low in the visible radiation region and the energy conversion efficiency is at a low level.

For these artificial photosynthesis technologies, the recovery/storage technology of CO₂ called CCS (Carbon Capture and Storage) is promising as a CO₂ supply source. CCS can supply high-concentration CO₂ in a liquid state and can be anticipated to act as a large-quantity CO₂ supply source for a large-scale plant in the future. In the CCS technology, a large quantity of CO₂ emitted from thermal power plants and the like is absorbed by chemical reactions using a liquid absorbent containing amine molecules. The amine molecule is a material of low chemical stability and is gradually oxidized even in a natural state. Thus, an imidazole sulfur material or the like is separately added as an oxidation inhibitor of amine molecules.

In an artificial photosynthesis system, however, a strong oxidation environment is provided by the anode. Thus, rather than a desirable oxidation reaction of water, amine molecules in the CO₂ liquid absorbent used for CCS are preferentially oxidized. As a result, problems such as being unable to recover/reuse the amine absorbent and a lower generation rate of oxygen obtained by oxidizing water are expected. Even if an oxidation inhibitor such as an imidazole sulfur material is a countermeasure effective for natural oxidation of amine molecules, the oxidation inhibitor is considered to be insufficient in a strong oxidation environment such as artificial photosynthesis.

An artificial photosynthesis system capable of effectively inhibiting oxidation of amine molecules even in an anode as a strong oxidation environment.

### Citation List

### Patent Literatures

Patent Literature 1: Jpn. Pat. Appln. KOKAI Publication No. 2011-094194
Patent Literature 2: Jpn. Pat. Appln. KOKAI Publication No. 2005-199187

### Disclosure of Invention

### Technical Problem

A photochemical reaction device and a thin film using an amine solution as a CO₂ supply source and capable of preventing oxidation of amine molecules are provided.

### Solution to Problem

A photochemical reaction device according to the present embodiment includes an oxidation reaction portion that generates oxygen by oxidizing water, a reduction reaction portion that generates a carbon compound by reducing carbon dioxide and is arranged in a first solution containing amine molecules in which the carbon dioxide is absorbed, a semiconductor element that separates charges by light energy and is electrically connected to the oxidation reaction portion and the reduction reaction portion, and a thin film formed between the oxidation reaction portion and the first solution to inhibit transmission of the amine molecules from the first solution to the oxidation reaction portion.

### Brief Description of Drawings

FIG. 1 is a sectional view showing the configuration of a photochemical reaction device according to a first embodiment.
FIG. 2 is a sectional view showing the configuration of oxidation reaction particles according to the first embodiment.
FIG. 3 is a sectional view showing the configuration of reduction reaction particles according to the first embodiment.
FIG. 4 is a sectional view showing the configuration of a photochemical reaction device according to a second embodiment.
FIG. 5 is a sectional view showing the configuration of a diaphragm according to the second embodiment.
FIG. 6 is a sectional view showing the configuration of a photochemical reaction device according to a third embodiment.
FIG. 7 is a sectional view showing the configuration of an oxidation electrode according to the third embodiment.
FIG. 8 is a sectional view showing the configuration of an oxidation reaction portion according to the third embodiment.
FIG. 9 is a sectional view showing the configuration of a reduction electrode according to the third embodiment.
FIG. 10 is a sectional view showing the configuration of a reduction reaction portion according to the third embodiment.
FIG. 11 is a sectional view showing the configuration of a photochemical reaction device according to a fourth embodiment.
FIG. 12 is a sectional view showing the configuration of a photochemical reaction device according to a fifth embodiment.
FIG. 13 is a sectional view showing the configuration of a photochemical reaction device according to a sixth embodiment.
FIG. 14 is a perspective view showing the configuration of a power supply element according to the sixth embodiment.
FIG. 15 is a sectional view showing the configuration of the power supply element according to the sixth embodiment.

### Best Mode for Carrying Out the Invention

The present embodiment will be described below with reference to the drawings. In the drawings, the same reference numerals are attached to the same portions. Also, duplicate descriptions are provided when necessary.

### <First Embodiment>

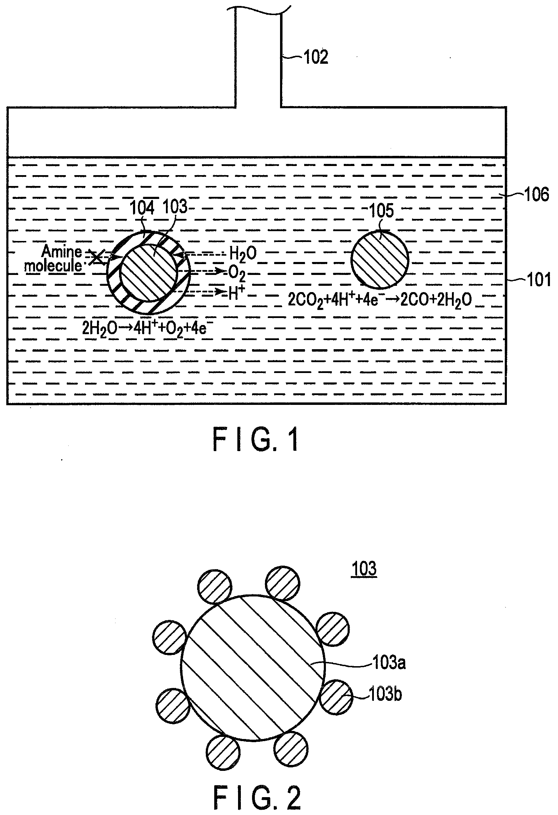

A photochemical reaction device according to the first embodiment will be described using FIGS. 1 to 3.

The photochemical reaction device according to the first embodiment is an example in which oxidation reaction particles 103 and reduction reaction particles 105 are arranged in an identical reaction solution 106 containing amine molecules and a thin film 104 that inhibits transmission of amine molecules is formed such as to cover the surface of the oxidation reaction particles 103. Accordingly, oxidation of amine molecules by the oxidation reaction particles 103 can be prevented. The first embodiment will be described in detail below.

### [Configuration]

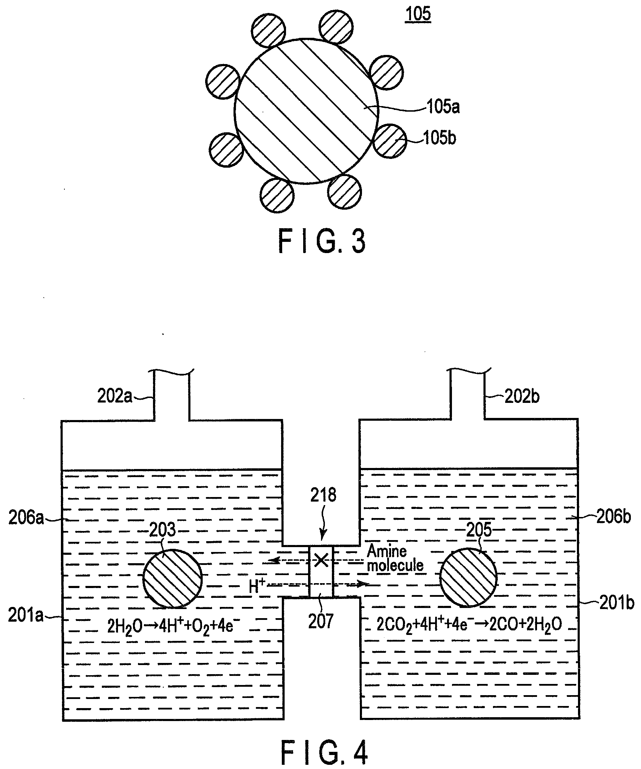

FIG. 1 is a sectional view showing the configuration of a photochemical reaction device according to the first embodiment. FIG. 2 is a sectional view showing the configuration of the oxidation reaction particles 103 according to the first embodiment. FIG. 3 is a sectional view showing the configuration of the reduction reaction particles 105 according to the first embodiment.

As shown in FIG. 1, a photochemical reaction device according to the first embodiment includes a reaction tank 101, a gas collecting path 102, the oxidation reaction particles 103, the thin film 104, the reduction reaction particles 105, and the reaction solution 106. Each element will be described in detail below.

The reaction tank 101 is a container to store the reaction solution 106. The reaction tank 101 is connected to the gas collecting path 102 and discharges a generated gas to the outside through the gas collecting path 102. The reaction tank 101 is desirably made fully sealed, excluding the gas collecting path 102 to efficiently collect gaseous products. To allow light to reach the reaction solution 106 and the surface of the oxidation reaction particles 103 and the reduction reaction particles 105, materials that absorb less light in the wavelength range of 250 nm or more and 1100 nm or less are desirable for the reaction tank 101. Such materials include, for example, quartz, polystyrol, methacrylate, and white board glass. To allow a uniform and efficient reaction in the reaction tank 101 during a reaction (during an oxidation reaction or reduction reaction), a stirrer may be provided in the reaction tank 101 to stir the reaction solution 106.

The volume of the reaction solution 106 is less than 100% of the storage capacity of the reaction tank 101, excluding the gas collecting path 102, and preferably fills 50% to 90% thereof and particularly preferably 70% to 90% thereof. A plurality of the oxidation reaction particles 103 and a plurality of the reduction reaction particles 105 are dispersed in the reaction solution 106. In FIG. 1, only the one oxidation reaction particle 103 and the one reduction reaction particle 105 are shown to simplify the illustration. Though details will be described below, an oxidation reaction of H₂O occurs on the surface of the oxidation reaction particles 103 and a reduction reaction of CO₂ occurs on the surface of the reduction reaction particles 105.

The reaction solution 106 may be any solution containing amine molecules that does not dissolve or corrode the oxidation reaction particles 103, the reduction reaction particles 105, and the thin film 104 and does not change the above elements in nature. As such a solution, for example, an amine solution of ethanolamine, imidazole, or pyridine can be cited. The amine may be one of primary amine, secondary amine, and tertiary amine. The primary amine includes methylamine, ethylamine, propylamine, butylamine, pentylamine, and hexylamine. A hydrocarbon of amine may be substituted by alcohol, a halogen or the like. Examples of an amine in which a hydrocarbon is substituted include methanolamine, ethanolamine, and chloromethylamine. Unsaturated bonding may be present in the amine. Such a hydrocarbon is similar in the secondary amine and tertiary amine. The secondary amine includes dimethylamine, diethylamine, dipropylamine, dibutylamine, dipentylamine, dihexylamine, dimethanolamine, diethanolamine, and dipropanolamine. A substituted hydrocarbon may be different. This also applies to the tertiary amine. Examples of different substituted hydrocarbons include methylethylamine and methylpropylamine. The tertiary amine includes trimethylamine, triethylamine, tripropylamine, tributylamine, trihexylamine, trimethanolamine, triethanolamine, tripropanolamine, tributanolamine, tripropanolamine, triexanolamine, methyldiethylamine, and methyldipropylamine. The reaction solution 106 contains CO₂ absorbed by amine molecules and with which a reduction reaction occurs.

The reaction solution 106 contains H₂O with which an oxidation reaction occurs and CO₂ absorbed by amine molecules and with which a reduction reaction occurs. In the present embodiment, an oxidation reaction and a reduction reaction occur on the surface of the oxidation reaction particles 103 and the reduction reaction particles 105 respectively. Therefore, it is desirable to electrically connect the oxidation reaction particles 103 and the reduction reaction particles 105 to exchange electrons (e⁻) or holes (h⁺) therebetween. For this purpose, a redox couple may be added to the reaction solution 106 when necessary. The redox couple is, for example, Fe³⁺/Fe²⁺, IO³⁻/I⁻ and the like.

As shown in FIG. 2, the oxidation reaction particle 103 includes an oxidation reaction semiconductor photocatalyst 103a and an oxidation reaction co-catalyst 103b formed on the surface thereof.

The oxidation reaction semiconductor photocatalyst 103a is excited by light energy to separate charges. At this point, the standard energy level of an excited hole is in a positive direction from the standard oxidation level of H₂O and the standard energy level of an excited electron is in a negative direction from the reduction level of the redox couple. Materials of the oxidation reaction semiconductor photocatalyst 103a include, for example, TiO₂, WO₃, SrTiO₃, Fe₂O₃, BiVO₄, Ag₃VO₄, and SnNb₂O₆.

The oxidation reaction co-catalyst 103b smoothly receives holes from the oxidation reaction semiconductor photocatalyst 103a to allow the holes to react with H₂O in the reaction solution 106 for oxidation of H₂O. Materials of the oxidation reaction co-catalyst 103b include, for example, RuO₂, NiO, Ni(OH)₂, NiOOH, Co₃O₄, Co(OH)₂, CoOOH, FeO, Fe₂O₃, MnO₂, Mn₃O₄, Rh₂O₃, and IrO₂. The oxidation reaction co-catalyst 103b is used to promote the oxidation reaction of the oxidation reaction particles 103 and may not be added if the oxidation reaction by the oxidation reaction semiconductor photocatalyst 103a is sufficient.

As shown in FIG. 3, the reduction reaction particle 105 includes a reduction reaction semiconductor photocatalyst 105a and a reduction reaction co-catalyst 105b formed on the surface thereof.

The reduction reaction semiconductor photocatalyst 105a is excited by light energy to separate charges. At this point, the standard energy level of an excited electron is in a negative direction from the standard reduction level of CO₂ and the standard energy level of an excited hole is in a positive direction from the standard oxidation level of the redox couple. Materials of the reduction reaction semiconductor photocatalyst 105a include, for example, TiO₂, N-Ta₂O₅ and the like.

The reduction reaction co-catalyst 105b smoothly receives electrons from the reduction reaction semiconductor photocatalyst 105a to allow the electrons to react with CO₂ in the reaction solution 106 for reduction of CO₂. Examples of the reduction reaction co-catalyst 105b as described above include Au, Ag, Zn, Cu, N-graphene, Hg, Cd, Pb, Ti, In, Sn, or a metal complex such as a ruthenium complex and a rhenium complex. The reduction reaction co-catalyst 105b is used to promote the reduction reaction of the reduction reaction particles 105 and may not be added if the oxidation reaction by the oxidation reaction semiconductor photocatalyst 103a is sufficient.

As described above, the oxidation reaction particle 103 becomes an anode to cause an oxidation reaction through photoexcited holes by the oxidation reaction semiconductor photocatalyst 103a and the reduction reaction particle 105 becomes a cathode to cause a reduction reaction through photoexcited electrons by the reduction reaction semiconductor photocatalyst 105a. More specifically, as an example, a reaction of Formula (1) occurs near the oxidation reaction particles 103 and a reaction of Formula (2) occurs near the reduction reaction particles 105.

2H₂O → 4H⁺ + O₂ + 4e⁻ ... (1)

2CO₂ + 4H⁺ + 4e- → 2CO + 2H₂O ... (2)

As shown in Formula (1), H₂O is oxidized (electrons are lost) and O₂ and H⁺ (hydrogen ions) are generated near the oxidation reaction particles 103. Then, H⁺ generated on the side of the oxidation reaction particle 103 moves to the side of the reduction reaction particle 105.

As shown in Formula (2), CO₂ and moved H⁺ react near the reduction reaction particle 105 to generate carbon monoxide (CO) and H₂O. That is, CO₂ is reduced (electrons are obtained).

As shown in FIG. 1, the thin film 104 covers the surface of the oxidation reaction particle 103. In other words, the thin film 104 is arranged between the oxidation reaction particle 103 and the reaction solution 106 and the oxidation reaction particle 103 does not come into direct contact with the reaction solution 106. The thin film 104 has a channel size that allows H₂O molecules, O₂ molecules, and hydrogen ions to pass through and inhibits transmission of amine molecules. If a redox couple is contained in the reaction solution 106, the thin film 104 has a channel size that allows the redox couple to pass through. More specifically, the thin film 104 has a channel size of 0.3 nm or more and 1.0 nm or less. As the thin film 104 as described above, a thin film containing at least one of graphene oxide, graphene, polyimide, carbon nanotube, diamond-like carbon, and zeolite can be cited.

The channel size is a dimension (a diameter or a width) of the transmission path of molecules or ions in the thin film 104. The transmission path of molecules or ions refers to thin holes provided in the thin film 104, but is not limited to such an example. If, for example, the thin film 104 has a multilayer structure of graphene or the like, the transmission path of molecules or ions is not limited to thin holes provided in graphene and may be an interlayer path in the multilayer structure. That is, the channel sizes refer to the thin film diameter, interlayer width or the like in the thin film 104.

Accordingly, the thin film 104 inhibits amine molecules from passing from the reaction solution 106 to the oxidation reaction particles 103 so that an oxidation reaction of amine molecules by the oxidation reaction particles 103 can be prevented. On the other hand, the thin film 104 allows H₂O molecules to pass from the reaction solution 106 to the oxidation reaction particles 103 and also allows O₂ molecules and H⁺ to pass from the oxidation reaction particles 103 to the reaction solution 106 and thus, the oxidation reaction of H₂O by the oxidation reaction particles 103 is not inhibited. That is, the thin film 104 functions as an amine molecule sieving film that inhibits transmission of amine molecules.

From the viewpoint of optical transparency and insulation properties, it is necessary to adjust the thickness of the thin film 104 when appropriate.

When the thin film 104 is formed, the quantity of light reaching the oxidation reaction semiconductor photocatalyst 103a decreases and thus, the number of photoexcited holes generated by the oxidation reaction semiconductor photocatalyst 103a decreases. Thus, from the viewpoint of optical transparency, it is necessary to be able to maintain the ratio of the number of photoexcited holes generated by the oxidation reaction semiconductor photocatalyst 103a when the thin film 104 is formed to the number of photoexcited holes generated by the oxidation reaction semiconductor photocatalyst 103a when the thin film 104 is not formed at 50% or more.

On the other hand, the thin film 104 is directly provided on the surface of the oxidation reaction particle 103 in the first embodiment and thus, if the thin film 104 has electric conductivity, an oxidation reaction of amine molecules occurs on the surface of the thin film 104. Thus, the thin film 104 needs to have insulation properties. Therefore, the thin film 104 desirably contains an insulating material, that is, graphene oxide, polyimide, diamond-like carbon, or zeolite. However, the present embodiment is not limited to such an example and a material having no insulation properties (for example, graphene or carbon nanotube) may be used as the thin film 104 by adding insulation properties to the material. Methods of adding insulation properties to graphene or carbon nanotube include adopting a sufficient thickness, mixing an insulating material, and adjusting the crystal lattice.

When, for example, graphene oxide is used as the thin film 104, from the viewpoint of optical transparency and insulation properties, the thickness thereof is desirably set to 1 nm or more and 100 nm or less and more desirably 3 nm or more and 50 nm or less. These lower limits take insulation properties of graphene oxide into consideration and the upper limits take optical transparency into consideration.

### [Effect]

According to the first embodiment, the oxidation reaction particles 103 and the reduction reaction particles 105 are arranged in the identical reaction solution 106 containing amine molecules and the thin film 104 is formed such as to cover the surface of the oxidation reaction particles 103. The thin film 104 functions as an amine molecule sieving film that inhibits transmission of amine molecules. Accordingly, transmission of amine molecules from the reaction solution 106 to the oxidation reaction particles 103 can be inhibited. That is, direct contact between amine molecules and the oxidation reaction particles 103 can be prevented and an oxidation reaction of amine molecules by the oxidation reaction particles 103 can be prevented.

### <Second Embodiment>

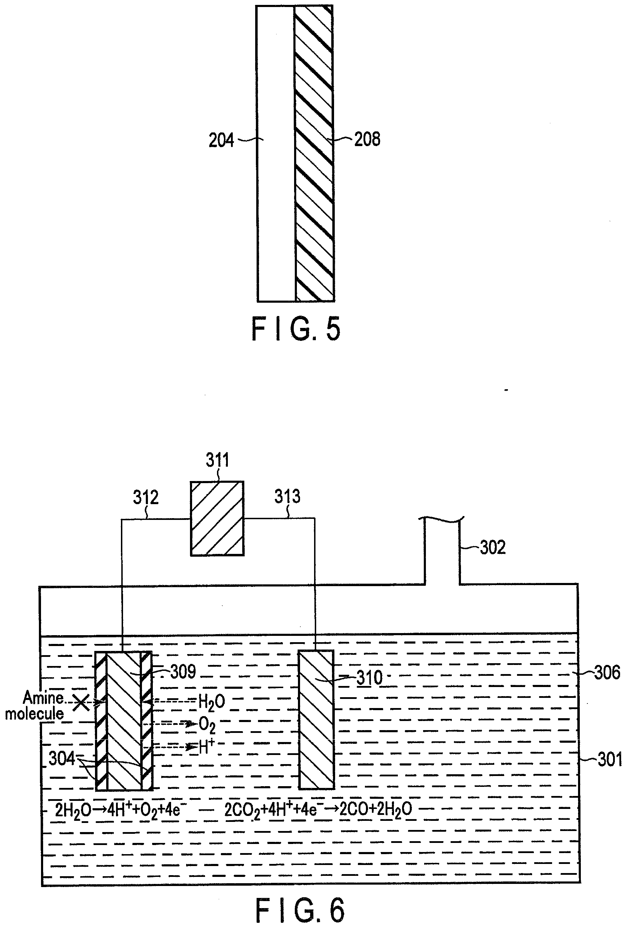

A photochemical reaction device according to the second embodiment will be described using FIGS. 4 and 5.

In the photochemical reaction device according to the second embodiment, reduction reaction particles 205 are arranged in a reduction reaction solution 206b and oxidation reaction particles 203 are arranged in an oxidation reaction solution 206a. Then, a diaphragm 207 containing a thin film 204 that inhibits transmission of amine molecules is formed between the oxidation reaction solution 206a and the reduction reaction solution 206b. Accordingly, oxidation of amine molecules by the oxidation reaction particles 203 can be prevented. The second embodiment will be described in detail below.

In the second embodiment, the description mainly focuses on differences while omitting points similar to those in the first embodiment.

### [Configuration]

FIG. 4 is a sectional view showing the configuration of a photochemical reaction device according to the second embodiment. FIG. 5 is a sectional view showing the configuration of the diaphragm 207 according to the second embodiment.

As shown in FIG. 4, the photochemical reaction device according to the second embodiment includes an oxidation reaction tank 201a, a reduction reaction tank 201b, an oxygen collecting path 202a, a gaseous carbon compound collecting path 202b, the oxidation reaction particles 203, the diaphragm 207, the reduction reaction particles 205, an oxidation reaction solution 206a, and a reduction reaction solution 206b. Each element will be described in detail below.

The oxidation reaction tank 201a is a container to store the oxidation reaction solution 206a. The oxidation reaction tank 201a is connected to the oxygen collecting path 202a and discharges a generated gas to the outside through the oxygen collecting path 202a. The oxidation reaction tank 201a is desirably made fully sealed excluding the oxygen collecting path 202a to efficiently collect gaseous products.

To allow light to reach the oxidation reaction solution 206a and the surface of the oxidation reaction particles 203, materials that absorb less light in the wavelength range of 250 nm or more and 1100 nm or less are desirable for the oxidation reaction tank 201a. Such materials include, for example, quartz, polystyrol, methacrylate, and white board glass. To allow a uniform and efficient reaction in the oxidation reaction tank 201a during a reaction (during an oxidation reaction), a stirrer may be provided in the oxidation reaction tank 201a to stir the oxidation reaction solution 206a.

The volume of the oxidation reaction solution 206a is less than 100% of the storage capacity of the oxidation reaction tank 201a excluding the oxygen collecting path 202a and preferably fills 50% to 90% thereof and particularly preferably 70% to 90% thereof. A plurality of the oxidation reaction particles 203 are dispersed in the oxidation reaction solution 206a. In FIG. 4, only the one oxidation reaction particle 203 is shown to simplify the illustration. An oxidation reaction of H₂O occurs on the surface of the oxidation reaction particles 203.

The oxidation reaction solution 206a may be any solution that does not dissolve or corrode the oxidation reaction particles 203 and the diaphragm 207 and does not change the above elements in nature. Examples of such a solution include a sulfuric acid solution, a sulfate solution, a phosphoric acid solution, a phosphate solution, a boric acid solution, a borate solution, and a hydroxide salt solution. The oxidation reaction solution 206a contains H₂O to which an oxidation reaction occurs.

The reduction reaction tank 201b is a container to store the reduction reaction solution 206b. If the substance generated by reducing CO₂ is a gas, the reduction reaction tank 201b is connected to the gaseous carbon compound collecting path 202b and discharges a generated gas to the outside through the gaseous carbon compound collecting path 202b. The reduction reaction tank 201b is desirably made fully sealed, excluding the gaseous carbon compound collecting path 202b, to efficiently collect gaseous products. On the other hand, if the substance generated by reducing CO₂ is not a gas, the reduction reaction tank 201b may not be connected to the gaseous carbon compound collecting path 202b. In such a case, the reduction reaction tank 201b and the oxidation reaction tank 201a are fully sealed, excluding the oxygen collecting path 202a.

To allow light to reach the reduction reaction solution 206b and the surface of the reduction reaction particles 203, materials that absorb less light in the wavelength range of 250 nm or more and 1100 nm or less are desirable for the reduction reaction tank 201b. Such materials include, for example, quartz, polystyrol, methacrylate, and white board glass. To allow a uniform and efficient reaction in the reduction reaction tank 201b during a reaction (during a reduction reaction), a stirrer may be provided in the reduction reaction tank 201b to stir the reduction reaction solution 206b.

If the substance generated by reducing CO₂ is a gas, the volume of the reduction reaction solution 206b is less than 100% of the storage capacity of the reduction reaction tank 201b, excluding the gaseous carbon compound collecting path 202b, and preferably fills 50% to 90% thereof and particularly preferably 70% to 90% thereof. On the other hand, if the substance generated by reducing C02 is a gas, the reduction reaction solution 206b desirably fills 100% of the storage capacity of the reduction reaction tank 201b and fills at least 90% thereof. A plurality of the reduction reaction particles 205 is dispersed in the reduction reaction solution 206b. In FIG. 4, only the one reduction reaction particle 205 is shown to simplify the illustration. A reduction reaction of CO₂ occurs on the surface of the reduction reaction particles 205.

The reduction reaction solution 206b may be any solution that does not dissolve or corrode the reduction reaction particles 205 and the diaphragm 207 and does not change the above elements in nature. As such a solution, for example, an amine solution of ethanolamine, imidazole, or pyridine can be cited. Amine may be one of primary amine, secondary amine, and tertiary amine. Primary amine includes methylamine, ethylamine, propylamine, butylamine, pentylamine, and hexylamine. A hydrocarbon of amine may be substituted by an alcohol, halogen or the like. Examples of an amine in which a hydrocarbon is substituted include methanolamine, ethanolamine, and chloromethylamine. Unsaturated bonding may be present in amine. Such a hydrocarbon is similar in the secondary amine and tertiary amine. The secondary amine includes dimethylamine, diethylamine, dipropylamine, dibutylamine, dipentylamine, dihexylamine, dimethanolamine, diethanolamine, and dipropanolamine. The substituted hydrocarbon may be different. This also applies to the tertiary amine. Examples of different substituted hydrocarbons include methylethylamine and methylpropylamine. The tertiary amine includes trimethylamine, triethylamine, tripropylamine, tributylamine, trihexylamine, trimethanolamine, triethanolamine, tripropanolamine, tributanolamine, tripropanolamine, triexanolamine, methyldiethylamine, and methyldipropylamine. The reduction reaction solution 206b contains CO₂ absorbed by amine molecules and with which a reduction reaction occurs.

The oxidation reaction tank 201a and the reduction reaction tank 201b are connected by a joint 218. The diaphragm 207 is arranged in the joint 218. That is, the diaphragm 207 is arranged between the oxidation reaction solution 206a and the reduction reaction solution 206b to physically separate these solutions.

In the present embodiment, an oxidation reaction and a reduction reaction occur on the surface of the oxidation reaction particles 203 and the reduction reaction particles 205 respectively. Therefore, it is desirable to electrically connect the oxidation reaction particles 203 and the reduction reaction particles 205 to exchange electrons or holes therebetween. For this purpose, a redox couple may be added to the oxidation reaction solution 206a and the reduction reaction solution 206b when necessary. The redox couple is, for example, Fe³⁺/Fe²⁺, IO³⁻/I⁻ and the like.

The oxidation reaction particle 203 is configured in the same manner as the oxidation reaction particle 103 in the first embodiment. That is, the oxidation reaction particle 203 includes an oxidation reaction semiconductor photocatalyst excited by light energy to separate charges and an oxidation reaction co-catalyst to promote an oxidation reaction.

The reduction reaction particle 205 is configured in the same manner as the reduction reaction particle 105 in the first embodiment. That is, the reduction reaction particle 205 includes a reduction reaction semiconductor photocatalyst excited by light energy to separate charges and a reduction reaction co-catalyst to promote a reduction reaction.

The diaphragm 207 is arranged in the joint 218 connecting the oxidation reaction tank 201a and the reduction reaction tank 201b. That is, the diaphragm 207 is arranged between the oxidation reaction solution 206a and the reduction reaction solution 206b to physically separate these solutions. In other words, the diaphragm 207 is arranged between the oxidation reaction particles 203 and the reduction reaction solution 206b and the oxidation reaction particles 203 are not in direct contact with the reduction reaction solution 206b.

As shown in FIG. 5, the diaphragm 207 includes a laminated film of the thin film 204 and a support film 208.

The thin film 204 has a channel size that allows H₂O molecules, O₂ molecules, and H⁺ to pass through and inhibits transmission of amine molecules. If a redox couple is contained in the oxidation reaction solution 206a and the reduction reaction solution 206b, the thin film 204 has a channel size that allows the redox couple to pass through. More specifically, the thin film 204 has a channel size of 0.3 nm or more and 1.0 nm or less. As the thin film 204 as described above, a thin film containing at least one of graphene oxide, graphene, polyimide, carbon nanotube, diamond-like carbon, and zeolite can be cited.

Accordingly, the thin film 204 inhibits amine molecules from passing from the reduction reaction solution 206b to the oxidation reaction solution 206a (oxidation reaction particles 203) so that an oxidation reaction of amine molecules by the oxidation reaction particles 203 can be prevented. On the other hand, the thin film 204 allows H⁺ to pass from the oxidation reaction solution 206a to the reduction reaction solution 206b and therefore, a reduction reaction of CO₂ molecules by the reduction reaction particles 205 can be promoted.

In contrast to the thin film 104 in the first embodiment, the thin film 204 is not involved in light reaching the inside of the oxidation reaction particles 203 and thus, there is no adjustment limitation in the design concerning optical transparency. Further, in contrast to the thin film 204 in the first embodiment, the thin film 204 is not in direct contact with the oxidation reaction particles 203 and thus, there is no adjustment limitation in the design concerning insulation properties. Therefore, the thickness and materials of the thin film 204 can be set without consideration of optical transparency and insulation properties.

The support film 208 can allow a specific substance contained in the oxidation reaction solution 206a and a specific substance contained in the reduction reaction solution 206b to selectively pass through. The support film 208 is, for example, a cation exchange membrane such as Nafion or Flemion or an anion exchange membrane such as Neosepta or Selemion.

In addition, the support film 208 is not involved in light reaching the inside of the oxidation reaction particles 203 and the reduction reaction particles 205 and thus, there is no adjustment limitation in the design concerning optical transparency.

Incidentally, if selective transmission of a specific substance contained in the oxidation reaction solution 206a and a specific substance contained in the reduction reaction solution 206b is achieved by the thin film 204 alone, the support film 208 may be omitted.

In the diaphragm 207, the order of stacking the thin film 204 and the support film 208 does not matter. In other words, it does matter which of the thin film 204 and support film 208 is on the oxidation reaction tank 201a side or the reduction reaction tank 201b side. If the oxidation reaction solution 206a and the reduction reaction solution 206b are physically separated, transmission of amine molecules is inhibited, a specific substance is selectively allowed to pass through, and sufficient mechanical strength is possessed, these films may be designed to have any orientation.

### [Effect]

According to the second embodiment, the reduction reaction particles 205 are arranged in the reduction reaction solution 206b containing amine molecules and the oxidation reaction particles 203 are arranged in the oxidation reaction solution 206a. Then, the diaphragm 207 including the thin film 204 that inhibits transmission of amine molecules is formed between the oxidation reaction solution 206a (oxidation reaction particles 203) and the reduction reaction solution 206b. Accordingly, an effect similar to that in the first embodiment can be achieved.

### <Third Embodiment>

A photochemical reaction device according to the third embodiment will be described using FIGS. 6 to 10.

In the photochemical reaction device according to the third embodiment, an oxidation electrode 309 and a reduction electrode 310 are arranged in an identical reaction solution 306 containing amine molecules and a thin film 304 that inhibits transmission of amine molecules is formed such as to cover the surface of the oxidation electrode 309. Accordingly, oxidation of amine molecules by the oxidation electrode 309 (oxidation reaction portion 303) can be prevented. The third embodiment will be described in detail below.

In the third embodiment, the description mainly focuses on differences while omitting points similar to those in the above embodiments.

### [Configuration]

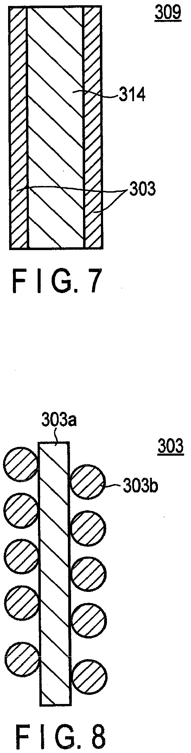

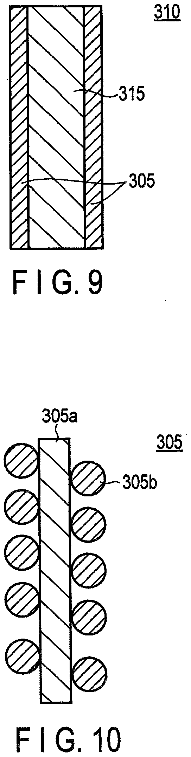

FIG. 6 is a sectional view showing the configuration of a photochemical reaction device according to the third embodiment. FIG. 7 is a sectional view showing the configuration of the oxidation electrode 309 according to the third embodiment. FIG. 8 is a sectional view showing the configuration of the oxidation reaction portion 303 according to the third embodiment. FIG. 9 is a sectional view showing the configuration of the reduction electrode 310 according to the third embodiment. FIG. 10 is a sectional view showing the configuration of a reduction reaction portion 305 according to the third embodiment.

As shown in FIG. 6, the photochemical reaction device according to the third embodiment includes a reaction tank 301, a gas collecting path 302, the oxidation electrode 309, the thin film 304, the reduction electrode 310, the reaction solution 306, a power supply element (semiconductor element) 311, an oxidation-side electric connection portion 312, and a reduction-side electric connection portion 313. Each element will be described in detail below.

The reaction tank 301 is a container to store the reaction solution 306. The reaction tank 301 is connected to the gas collecting path 302 and discharges a generated gas to the outside through the gas collecting path 302. The reaction tank 301 is desirably made fully sealed, excluding the gas collecting path 302, to efficiently collect gaseous products.

To allow light to reach the reaction solution 306 and the surface of the oxidation electrode 309 and the reduction electrode 310, materials that absorb less light in the wavelength range of 250 nm or more and 1100 nm or less are desirable for the reaction tank 301. Such materials include, for example, quartz, polystyrol, methacrylate, and white board glass. To allow a uniform and efficient reaction in the reaction tank 301 during a reaction (during an oxidation reaction or reduction reaction), a stirrer may be provided in the reaction tank 301 to stir the reaction solution 306.

The volume of the reaction solution 306 is less than 100% of the storage capacity of the reaction tank 301 excluding the gas collecting path 302 and preferably fills 50% to 90% thereof and particularly preferably 70% to 90% thereof. The oxidation electrode 309 and the reduction electrode 310 are impregnated with the reaction solution 306. An oxidation reaction of H₂O occurs on the surface of the oxidation electrode 309 (oxidation reaction portion 303) and a reduction reaction of CO₂ occurs on the surface of the reduction electrode 310 (reduction reaction portion 305).

The reaction solution 306 may be any solution containing amine molecules that does not dissolve or corrode the oxidation electrode 309, the reduction electrode 310, and the thin film 304 and does not change the above elements in nature. As such a solution, for example, an amine solution of ethanolamine, imidazole, or pyridine can be cited. The amine may be one of primary amine, secondary amine, and tertiary amine. The primary amine includes methylamine, ethylamine, propylamine, butylamine, pentylamine, and hexylamine. A hydrocarbon of amine may be substituted by an alcohol, halogen or the like. Examples of an amine in which a hydrocarbon is substituted include methanolamine, ethanolamine, and chloromethylamine. Unsaturated bonding may be present in the amine. Such a hydrocarbon is similar in secondary amine and tertiary amine. A secondary amine includes dimethylamine, diethylamine, dipropylamine, dibutylamine, dipentylamine, dihexylamine, dimethanolamine, diethanolamine, and dipropanolamine. A substituted hydrocarbon may be different. This also applies to a tertiary amine. Examples of different substituted hydrocarbons include methylethylamine and methylpropylamine. A tertiary amine includes trimethylamine, triethylamine, tripropylamine, tributylamine, trihexylamine, trimethanolamine, triethanolamine, tripropanolamine, tributanolamine, tripropanolamine, triexanolamine, methyldiethylamine, and methyldipropylamine. The reaction solution 306 contains CO₂ absorbed by amine molecules and with which a reduction reaction occurs.

The reaction solution 306 contains H₂O with which an oxidation reaction occurs and CO₂ absorbed by amine molecules and with which a reduction reaction occurs. In the present embodiment, an oxidation reaction and a reduction reaction occur on the surface of the oxidation electrode 309 and the reduction electrode 310 respectively. Therefore, it is desirable to electrically connect the oxidation electrode 309 and the reduction electrode 310 to exchange electrons or holes therebetween. For this purpose, a redox couple may be added to the reaction solution 306 when necessary. The redox couple is, for example, Fe³⁺/Fe²⁺, IO³⁻/I⁻ and the like.

As shown in FIG. 7, the oxidation electrode 309 includes an oxidation electrode support substrate 314 for the formation as an electrode and the oxidation reaction portion 303 formed on the surface of the oxidation electrode support substrate 314 to cause an oxidation reaction of water.

The oxidation electrode support substrate 314 contains a material having electric conductivity. Examples of such a material include a metal such as Cu, Al, Ti, Ni, Fe, and Ag or an alloy like SUS containing at least one of the above metals.

As shown in FIG. 8, the oxidation reaction portion 303 includes an oxidation reaction semiconductor photocatalyst 303a and an oxidation reaction co-catalyst 303b formed on the surface thereof.

The oxidation reaction semiconductor photocatalyst 303a is excited by light energy to separate charges. At this point, the standard energy level of excited holes is in a positive direction from the standard oxidation level of H₂O. Materials of the oxidation reaction semiconductor photocatalyst 303a include, for example, TiO₂, WO₃, SrTiO₃, Fe₂O₃, BiVO₄, Ag₃VO₄, and SnNb₂O₆.

The oxidation reaction co-catalyst 303b smoothly receives holes from the oxidation reaction semiconductor photocatalyst 303a to allow the holes to react with H₂O in the reaction solution 306 for oxidation of H₂O. Materials of the oxidation reaction co-catalyst 303b as described above include, for example, RuO₂, NiO, Ni(OH)₂, NiOOH, Co₃O₄, Co(OH)₂, CoOOH, FeO, Fe₂O₃, MnO₂, Mn₃O₄, Rh₂O₃, and IrO₂. The oxidation reaction co-catalyst 303b is used to promote the oxidation reaction by the oxidation reaction portion 303 and may not be added if the oxidation reaction by the oxidation reaction semiconductor photocatalyst 303a is sufficient.

As shown in FIG. 9, the reduction electrode 310 includes a reduction electrode support substrate 315 for the formation as an electrode and the reduction reaction portion 305 formed on the surface of the reduction electrode support substrate 315 to cause a reduction reaction of CO₂.

The reduction electrode support substrate 315 contains a material having electric conductivity. Examples of such a material include a metal such as Cu, Al, Ti, Ni, Fe, and Ag or an alloy like SUS containing at least one of the above metals.

As shown in FIG. 10, the reduction reaction portion 305 includes a reduction reaction semiconductor photocatalyst 305a and a reduction reaction co-catalyst 305b formed on the surface thereof.

The reduction reaction semiconductor photocatalyst 305a is excited by light energy to separate charges. At this point, the standard energy level of excited electrons is in a negative direction from the standard oxidation level of CO₂. Materials of the reduction reaction semiconductor photocatalyst 305a include, for example, TiO₂ and N-Ta₂O₅.

The reduction reaction co-catalyst 305b smoothly receives electrons from the reduction reaction semiconductor photocatalyst 305a to allow the electrons to react with CO₂ in the reaction solution 306 for reduction of CO₂. Examples of the reduction reaction co-catalyst 305b as described above include Au, Ag, Zn, Cu, N-graphene, Hg, Cd, Pb, Ti, In, Sn, or a metal complex such as a ruthenium complex and a rhenium complex. The reduction reaction co-catalyst 305b is used to promote the reduction reaction of the reduction reaction portion 305 and may not be added if the reduction reaction by the reduction reaction semiconductor photocatalyst 305a is sufficient.

The oxidation-side electric connection portion (wire) 312 is electrically connected to the oxidation electrode 309 and the reduction-side electric connection portion (wire) 313 is electrically connected to the reduction electrode 310. Then, the oxidation electrode 309 and the reduction electrode 310 are electrically connected by the oxidation-side electric connection portion 312 and the reduction-side electric connection portion 313 being electrically connected. Accordingly, electrons and holes can be exchanged between oxidation electrode 309 and the reduction electrode 310.

The power supply element (semiconductor element) 311 is arranged between the oxidation-side electric connection portion 312 and the reduction-side electric connection portion 313 to be electrically connected to each. That is, the power supply element 311 is electrically connected to the oxidation electrode 309 and the reduction electrode 310 via a wire (the oxidation-side electric connection portion 312 and the reduction-side electric connection portion 313). The power supply element 311 is used to separate charges inside a material by light energy and is, for example, a pin junction, amorphous silicon solar cell, multi-junction solar cell, single crystal silicon solar cell, polycrystal silicon solar cell, dye sensitization solar cell, or organic thin film solar cell.

The power supply element 311 is installed as an auxiliary power supply when an oxidation reaction of H₂O and a reduction reaction of CO₂ are not smoothly caused simultaneously by a difference between the most positive standard photoexcited hole level and the most negative standard photoexcited electron level generated in the oxidation electrode 309 and the reduction electrode 310. Photoexcited holes generated inside the power supply element 311 can move to the oxidation electrode 309 via the oxidation-side electric connection portion 312 and photoexcited electrons generated inside the power supply element 311 can move to the reduction electrode 310 via the reduction-side electric connection portion 313. That is, if the oxidation electrode 309 and/or the reduction electrode 310 is not sufficiently charge-separated, the energy necessary to cause an oxidation reaction of water and a reduction reaction of CO₂ simultaneously is provided by the power supply element 311.

When the power supply element 311 is provided, a case when there is no need for internal charge separation by absorbing light energy in the oxidation electrode 309 can be considered. In such a case, the oxidation reaction semiconductor photocatalyst 303a is not formed and the oxidation electrode 309 is configured by the oxidation electrode support substrate 314 and the oxidation reaction co-catalyst 303b. Then, photoexcited holes generated in the power supply element 311 are transferred to the oxidation reaction co-catalyst 303b via the oxidation-side electric connection portion 312 and the oxidation electrode support substrate 314. Also in such a case, the oxidation electrode support substrate 314 and the oxidation reaction co-catalyst 303b may be formed of the same material. In this case, the oxidation electrode support substrate 314 and the oxidation reaction co-catalyst 303b refer to the same thing and photoexcited holes generated in the power supply element 311 flow into the oxidation electrode support substrate 314, that is, the oxidation reaction co-catalyst 303b via the oxidation-side electric connection portion 312.

Similarly, when the power supply element 311 is provided, a case when there is no need for internal charge separation by absorbing light energy in the reduction electrode 310 can be considered. In such a case, the reduction reaction semiconductor photocatalyst 305a is not formed and the reduction electrode 310 is configured by the reduction electrode support substrate 314 and the reduction reaction co-catalyst 303b. Then, photoexcited electrons generated in the power supply element 311 are transferred to the reduction reaction co-catalyst 303b via the reduction-side electric connection portion 312 and the reduction electrode support substrate 315. Also in such a case, the reduction electrode support substrate 315 and the reduction reaction co-catalyst 305b may be formed of the same material. In this case, the reduction electrode support substrate 315 and the reduction reaction co-catalyst 305b refer to the same thing and photoexcited electrons generated in the power supply element 311 flow into the reduction electrode support substrate 315, that is, the reduction reaction co-catalyst 305b via the reduction-side electric connection portion 313.

As shown in FIG. 6, the thin film 304 covers the surface of the oxidation electrode 309. In other words, the thin film 304 is arranged between the oxidation electrode 309 (oxidation reaction portion 303) and the reaction solution 306 and the oxidation reaction portion 303 does not come into direct contact with the reaction solution 306. The thin film 304 has a channel size that allows H₂O molecules, O₂ molecules, and H⁺ to pass through and inhibits transmission of amine molecules. If a redox couple is contained in the reaction solution 306, the thin film 304 has a channel size that allows the redox couple to pass through. More specifically, the thin film 304 has a channel size of 0.3 nm or more and 1.0 nm or less. As the thin film 304 as described above, a thin film containing at least one of graphene oxide, graphene, polyimide, carbon nanotube, diamond-like carbon, and zeolite can be cited.

Accordingly, the thin film 304 inhibits amine molecules from passing from the reaction solution 306 to the oxidation reaction portion 303 so that an oxidation reaction of amine molecules by the oxidation reaction portion 303 can be prevented. On the other hand, the thin film 304 allows H₂O molecules to pass from the reaction solution 306 to the oxidation reaction portion 303 and also allows O₂ molecules and H⁺ to pass from the oxidation reaction portion 303 to the reaction solution 306 and thus, the oxidation reaction of H₂O by the oxidation reaction portion 303 is not inhibited. That is, the thin film 304 functions as an amine molecule sieving film that inhibits transmission of amine molecules.

Like the thin film 104 in the first embodiment, from the viewpoint of optical transparency and insulation properties, it is necessary to adjust the thickness of the thin film 304 when appropriate. When, for example, graphene oxide is used as the thin film 304, the thickness thereof is desirably set to 1 nm or more and 100 nm or less and more desirably 3 nm or more and 50 nm or less. From the viewpoint of optical transparency and insulation properties, these lower limits take insulation properties of graphene oxide into consideration and the upper limits take optical transparency into consideration. If the oxidation reaction portion 303 does not have the oxidation reaction semiconductor photocatalyst 303a, there is no need to consider optical transparency of the thin film 304. Therefore, the thickness of the thin film 304 (graphene oxide) is desirably 1 nm or more and more desirably 3 nm or more.

### [Effect]

According to the third embodiment, the oxidation electrode 309 and the reduction electrode 310 are arranged in the identical reaction solution 306 containing amine molecules and the thin film 304 is formed so as to cover the surface of the oxidation electrode 309. Accordingly, an effect similar to that in the first embodiment can be achieved.

Also in the third embodiment, in addition to the oxidation reaction portion 303 and the reduction reaction portion 305, the power supply element 311 that separates charges by light energy is provided. The reaction efficiency of an oxidation reaction in the oxidation reaction portion 303 and a reduction reaction in the reduction reaction portion 305 can be improved by the power supply element 311 being electrically connected to the oxidation reaction portion 303 and the reduction reaction portion 305 via a wire.

### <Fourth Embodiment>

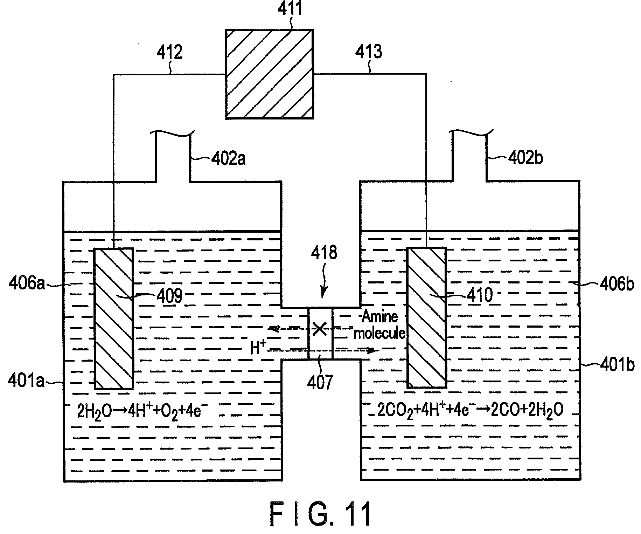

A photochemical reaction device according to the fourth embodiment will be described using FIG. 11.

In the photochemical reaction device according to the fourth embodiment, a reduction electrode 410 is arranged in a reduction reaction solution 406b and an oxidation electrode 409 is arranged in an oxidation reaction solution 406a. Then, a diaphragm 407 containing a thin film that inhibits transmission of amine molecules is formed between the oxidation reaction solution 406a and the reduction reaction solution 406b. Accordingly, oxidation of amine molecules by the oxidation electrode (oxidation reaction portion) 409 can be prevented. The fourth embodiment will be described in detail below.

In the fourth embodiment, the description mainly focuses on differences while omitting points similar to those in the above embodiments.

### [Configuration]

FIG. 11 is a sectional view showing the configuration of a photochemical reaction device according to the fourth embodiment.

As shown in FIG. 11, the photochemical reaction device according to the fourth embodiment includes an oxidation reaction tank 401a, a reduction reaction tank 401b, an oxygen collecting path 402a, a gaseous carbon compound collecting path 402b, the oxidation electrode 409, the diaphragm 407, the reduction electrode 410, the oxidation reaction solution 406a, the reduction reaction solution 406b, a power supply element 411, an oxidation-side electric connection portion 412, and a reduction-side electric connection portion 413. Each element will be described in detail below.

The oxidation reaction tank 401a is a container to store the oxidation reaction solution 406a. The oxidation reaction tank 401a is connected to the oxygen collecting path 402a and discharges a generated gas to the outside through the oxygen collecting path 402a. The oxidation reaction tank 401a is desirably made fully sealed, excluding the oxygen collecting path 402a, to efficiently collect gaseous products.

To allow light to reach the oxidation reaction solution 406a and the surface of the oxidation electrode 409, materials that absorb less light in the wavelength range of 250 nm or more and 1100 nm or less are desirable for the oxidation reaction tank 401a. Such materials include, for example, quartz, polystyrol, methacrylate, and white board glass. To allow a uniform and efficient reaction in the oxidation reaction tank 401a during a reaction (during an oxidation reaction), a stirrer may be provided in the oxidation reaction tank 401a to stir the oxidation reaction solution 406a.

The volume of the oxidation reaction solution 406a is less than 100% of the storage capacity of the oxidation reaction tank 401a excluding the oxygen collecting path 402a and preferably fills 50% to 90% thereof and particularly preferably 70% to 90% thereof. The oxidation electrode 409 is impregnated with the oxidation reaction solution 406a. An oxidation reaction of H₂O occurs on the surface of the oxidation electrode 409 (oxidation reaction portion).

The oxidation reaction solution 406a may be any solution that does not dissolve or corrode the oxidation electrode 409 and the diaphragm 407 and does not change the above elements in nature. Examples of such a solution include a sulfuric acid solution, a sulfate solution, a phosphoric acid solution, a phosphate solution, a boric acid solution, a borate solution, and a hydroxide salt solution. The oxidation reaction solution 406a contains H₂O to which an oxidation reaction occurs.

The reduction reaction tank 401b is a container to store the reduction reaction solution 406b. If the substance generated by reducing CO₂ is a gas, the reduction reaction tank 401b is connected to the gaseous carbon compound collecting path 402b and discharges a generated gas to the outside through the gaseous carbon compound collecting path 402b. The reduction reaction tank 401b is desirably made fully sealed, excluding the gaseous carbon compound collecting path 402b, to efficiently collect gaseous products. On the other hand, if the substance generated by reducing CO₂ is not a gas, the reduction reaction tank 401b may not be connected to the gaseous carbon compound collecting path 402b. In such a case, the reduction reaction tank 401b and the oxidation reaction tank 401a are fully sealed, excluding the oxygen collecting path 402a.

To allow light to reach the (reduction reaction solution 406b and the surface of the reduction electrode 410, materials that absorb less light in the wavelength range of 250 nm or more and 1100 nm or less are desirable for the reduction reaction tank 401b. Such materials include, for example, quartz, polystyrol, methacrylate, and white board glass. To allow a uniform and efficient reaction in the reduction reaction tank 401b during a reaction (during a reduction reaction), a stirrer may be provided in the reduction reaction tank 401b to stir the reduction reaction solution 406b.

If the substance generated by reducing CO₂ is a gas, the volume of the reduction reaction solution 406b is less than 100% of the storage capacity of the reduction reaction tank 401b excluding the gaseous carbon compound collecting path 402b and preferably fills 50% to 90% thereof and particularly preferably 70% to 90% thereof. On the other hand, if the substance generated by reducing CO₂ is not a gas, the reduction reaction solution 406b desirably fills 100% of the storage capacity of the reduction reaction tank 401b and fills at least 90% thereof. The reduction electrode 410 is impregnated with the reduction reaction solution 406b. A reduction reaction of CO₂ occurs on the surface of the reduction electrode 410 (reduction reaction portion).

The reduction reaction solution 406b may be any solution containing amine molecules that does not dissolve or corrode the reduction electrode 410 and the diaphragm 407 and does not change the above elements in nature. As such a solution, for example, an amine solution of ethanolamine, imidazole, or pyridine can be cited. The amine may be one of a primary amine, secondary amine, and tertiary amine. The primary amine includes methylamine, ethylamine, propylamine, butylamine, pentylamine, and hexylamine. A hydrocarbon of amine may be substituted by an alcohol, halogen or the like. Examples of an amine in which a hydrocarbon is substituted include methanolamine, ethanolamine, and chloromethylamine. Unsaturated bonding may be present in the amine. Such a hydrocarbon is similar in the secondary amine and tertiary amine. The secondary amine includes dimethylamine, diethylamine, dipropylamine, dibutylamine, dipentylamine, dihexylamine, dimethanolamine, diethanolamine, and dipropanolamine. A substituted hydrocarbon may be different. This also applies to the tertiary amine. Examples of different substituted hydrocarbons include methylethylamine and methylpropylamine. The tertiary amine includes trimethylamine, triethylamine, tripropylamine, tributylamine, trihexylamine, trimethanolamine, triethanolamine, tripropanolamine, tributanolamine, tripropanolamine, triexanolamine, methyldiethylamine, and methyldipropylamine. The reduction reaction solution 406b contains CO₂ absorbed by amine molecules and with which a reduction reaction occurs.

The oxidation reaction tank 401a and the reduction reaction tank 401b are connected by a joint 418. The diaphragm 407 is arranged in the joint 418. That is, the diaphragm 407 is arranged between the oxidation reaction solution 406a and the reduction reaction solution 406b to physically separate these solutions.

In the present embodiment, an oxidation reaction and a reduction reaction occur on the surface of the oxidation electrode 409 and the reduction electrode 410 respectively. Therefore, it is desirable to electrically connect the oxidation electrode 409 and the reduction electrode 410 to exchange electrons or holes therebetween. For this purpose, a redox couple may be added to the oxidation reaction solution 406a and the reduction reaction solution 406b when necessary. The redox couple is, for example, Fe³⁺/Fe²⁺, IO³⁻/I⁻ and the like.

The oxidation electrode 409 is configured in the same manner as the oxidation electrode 309 in the third embodiment. That is, the oxidation electrode 409 includes an oxidation electrode support substrate for the formation as an electrode and an oxidation reaction portion formed on the surface of the oxidation electrode support substrate 314 to cause an oxidation reaction of water. Further, the oxidation reaction portion includes an oxidation reaction semiconductor photocatalyst excited by light energy to separate charges and an oxidation reaction co-catalyst to promote an oxidation reaction.

The reduction electrode 410 is configured in the same manner as the reduction electrode 310 in the third embodiment. That is, the reduction electrode 410 includes a reduction electrode support substrate for the formation as an electrode and a reduction reaction portion formed on the surface of the reduction electrode support substrate 314 to cause a reduction reaction of CO₂. Further, the reduction reaction portion includes a reduction reaction semiconductor photocatalyst excited by light energy to separate charges and a reduction reaction co-catalyst to promote a reduction reaction.

The oxidation-side electric connection portion (wire) 412 is electrically connected to the oxidation electrode 409 and the reduction-side electric connection portion (wire) 413 is electrically connected to the reduction electrode 410. Then, the oxidation electrode 409 and the reduction electrode 410 are electrically connected by the oxidation-side electric connection portion 412 and the reduction-side electric connection portion 413 being electrically connected. Accordingly, electrons and holes can be exchanged between the oxidation electrode 409 and the reduction electrode 410.

The power supply element (semiconductor element) 411 is arranged between the oxidation-side electric connection portion 412 and the reduction-side electric connection portion 413 to be electrically connected to each. That is, the power supply element 411 is electrically connected to the oxidation electrode 409 and the reduction electrode 410 via a wire (the oxidation-side electric connection portion 412 and the reduction-side electric connection portion 413). The power supply element 411 is used to separate charges inside a material by light energy and is, for example, a pin junction, amorphous silicon solar cell, multi-junction solar cell, single crystal silicon solar cell, polycrystal silicon solar cell, dye sensitization solar cell, or organic thin film solar cell.

The power supply element 411 is installed as an auxiliary power supply when an oxidation reaction of H₂O and a reduction reaction of CO₂ are not smoothly caused simultaneously by a difference between the most positive standard photoexcited hole level and the most negative standard photoexcited electron level generated in the oxidation electrode 409 and the reduction electrode 410. Photoexcited holes generated inside the power supply element 411 can move to the oxidation electrode 409 via the oxidation-side electric connection portion 412 and photoexcited electrons generated inside the power supply element 411 can move to the reduction electrode 410 via the reduction-side electric connection portion 413. That is, if the oxidation electrode 409 and/or the reduction electrode 410 is not sufficiently charge-separated, the energy necessary to cause an oxidation reaction of water and a reduction reaction of CO₂ simultaneously is provided by the power supply element 411.

When the power supply element 411 is provided, a case when there is no need for internal charge separation by absorbing light energy in the oxidation electrode 409 can be considered. In such a case, the oxidation reaction semiconductor photocatalyst is not formed and the oxidation electrode 409 is configured only by the oxidation electrode support substrate and the oxidation reaction co-catalyst.

Similarly, when the power supply element 411 is provided, a case when there is no need for internal charge separation by absorbing light energy in the reduction electrode 410 can be considered. In such a case, the reduction reaction semiconductor photocatalyst is not formed and the reduction electrode 410 is configured only by the reduction electrode support substrate and the reduction reaction co-catalyst.

The diaphragm 407 is arranged in the joint 418 connecting the oxidation reaction tank 401a and the reduction reaction tank 401b. That is, the diaphragm 407 is arranged between the oxidation reaction solution 406a and the reduction reaction solution 406b to physically separate these solutions. In other words, the diaphragm 407 is arranged between the oxidation electrode 409 (oxidation reaction portion) and the reduction reaction solution 406b and the oxidation reaction portion is not in direct contact with the reduction reaction solution 406b.

The diaphragm 407 is configured in the same manner as the diaphragm 207 in the second embodiment. That is, the diaphragm 407 is configured as a laminated film of a thin film that inhibits transmission of amine molecules and a support film that allows only a specific substance contained in the oxidation reaction solution 406a and a specific substance contained in the reduction reaction solution 406b to selectively pass through. The thin film has a channel size that allows H₂O molecules, O₂ molecules, and H⁺ to pass through and inhibits transmission of amine molecules. If a redox couple is contained in the oxidation reaction solution 406a and the reduction reaction solution 406b, the thin film has a channel size that allows the redox couple to pass through. More specifically, the thin film has a channel size of 0.3 nm or more and 1.0 nm or less. As such a thin film, a thin film containing at least one of graphene oxide, graphene, polyimide, carbon nanotube, diamond-like carbon, and zeolite can be cited.

A case when selective transmission of a specific substance contained in the oxidation reaction solution 406a and a specific substance contained in the reduction reaction solution 406b can be achieved by the thin film only. In such a case, the diaphragm 407 includes only the thin film. Further, if the oxidation reaction solution 406a and the reduction reaction solution 406b are physically separated, transmission of amine molecules is inhibited, a specific substance is selectively allowed to pass through, and sufficient mechanical strength is possessed, the order of stacking the support film and the thin film in the diaphragm 407 does not matter.

Also, like the diaphragm 207 in the second embodiment, the thin film in the diaphragm 407 is not involved in light reaching the oxidation electrode 409 and/or the reduction electrode 410 and is not in direct contact with the oxidation electrode 409 and thus, there is no limitation in the design concerning optical transparency and insulation properties.

### [Effect]

According to the fourth embodiment, the reduction electrode 410 is arranged in the reduction reaction solution 406b containing amine molecules and the oxidation electrode 409 is arranged in the oxidation reaction solution 406a. Then, the diaphragm 407 including a thin film that inhibits transmission of amine molecules is formed between the oxidation reaction solution 406a (oxidation electrode 409) and the reduction reaction solution 406b. Accordingly, an effect similar to that in the first embodiment can be achieved.

Also in the fourth embodiment, in addition to the oxidation reaction portion and the reduction reaction portion, the power supply element 411 that separates charges by light energy is provided. Accordingly, an effect similar to that in the third embodiment can be gained.

### <Fifth Embodiment>

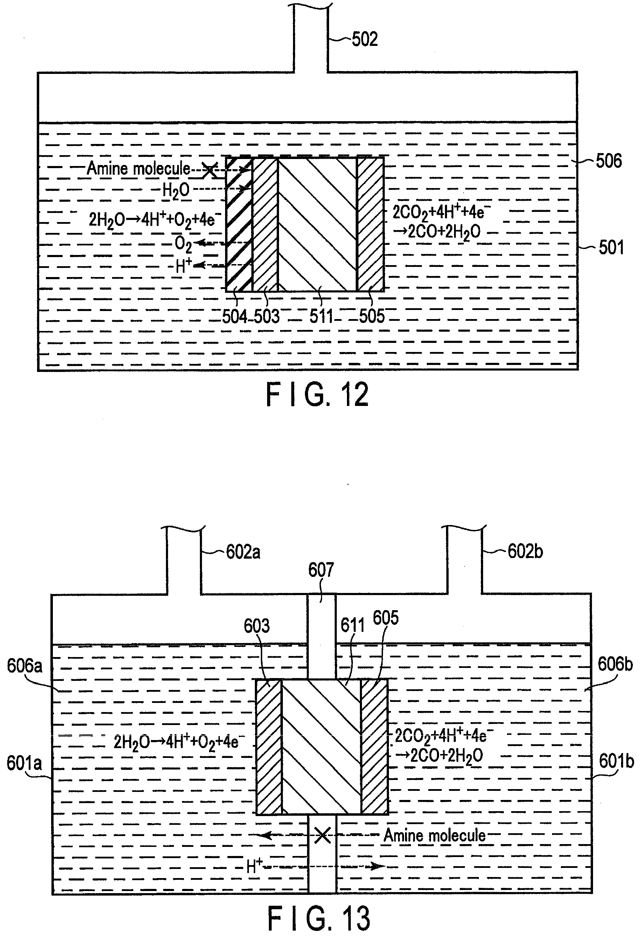

A photochemical reaction device according to the fifth embodiment will be described using FIG. 12.

In the photochemical reaction device according to the fifth embodiment, a laminated body of an oxidation reaction portion 503, a power supply element 511, and a reduction reaction portion 505 is arranged in an identical reaction solution 506 containing amine molecules and a thin film 504 that inhibits transmission of amine molecules is formed such as to cover the surface (exposed surface) of the oxidation reaction portion 503. Accordingly, oxidation of amine molecules by the oxidation reaction portion 503 can be prevented. The fifth embodiment will be described in detail below.

In the fifth embodiment, the description mainly focuses on differences while omitting points similar to those in the above embodiments.

### [Configuration]

FIG. 12 is a sectional view showing the configuration of a photochemical reaction device according to the fifth embodiment.

As shown in FIG. 12, the photochemical reaction device according to the fifth embodiment includes a reaction tank 501, a gas collecting path 502, the oxidation reaction portion 503, the thin film 504, the reduction reaction portion 505, the reaction solution 506, and the power supply element 511. Each element will be described in detail below.

The reaction tank 501 is a container to store the reaction solution 506. The reaction tank 501 is connected to the gas collecting path 502 and discharges a generated gas to the outside through the gas collecting path 502. The reaction tank 501 is desirably made fully sealed excluding the gas collecting path 502 to efficiently collect gaseous products.

To allow light to reach the inside of the reaction solution 506, the reduction reaction portion 505, the oxidation reaction portion 503, and the power supply element 511, materials that absorb less light in the wavelength range of 250 nm or more and 1100 nm or less are desirable for the reaction tank 501. Such materials include, for example, quartz, polystyrol, methacrylate, and white board glass. To allow a uniform and efficient reaction in the reaction tank 501 during a reaction (during an oxidation reaction or reduction reaction), a stirrer may be provided in the reaction tank 501 to stir the reaction solution 506. However, if a stirrer is provided, it is necessary to appropriately design the installation locations of the stirrer and the laminated body made of the oxidation reaction portion 503, the power supply element 511, and the reduction reaction portion 505 arranged in the reaction tank 501 so that the laminated body is not physically destroyed by stirring thereof. It is also necessary to appropriately design the installation locations of the stirrer and the laminated body so that the incident direction of light and the side of the oxidation reaction portion 503 in the laminated body are not shifted.

The volume of the reaction solution 506 is less than 100% of the storage capacity of the reaction tank 501 excluding the gas collecting path 502 and preferably fills 50% to 90% thereof and particularly preferably 70% to 90% thereof. The laminated body of the oxidation reaction portion 503, the power supply element 511, and the reduction reaction portion 505 is impregnated with the reaction solution 506. An oxidation reaction of H₂O occurs on the surface of the oxidation reaction portion 503 and a reduction reaction of CO₂ occurs on the surface of the reduction reaction portion 505.

The reaction solution 506 may be any solution containing amine molecules that does not dissolve or corrode the oxidation reaction portion 503, the power supply element 511, the reduction reaction portion 505, and the thin film 504 and does not change the above elements in nature. As such a solution, for example, an amine solution of ethanolamine, imidazole, or pyridine can be cited. The amine may be one of a primary amine, secondary amine, and tertiary amine. The primary amine includes methylamine, ethylamine, propylamine, butylamine, pentylamine, and hexylamine. A hydrocarbon of amine may be substituted by an alcohol, halogen or the like. Examples of an amine in which a hydrocarbon is substituted include methanolamine, ethanolamine, and chloromethylamine. Unsaturated bonding may be present in the amine. Such a hydrocarbon is similar in the secondary amine and tertiary amine. The secondary amine includes dimethylamine, diethylamine, dipropylamine, dibutylamine, dipentylamine, dihexylamine, dimethanolamine, diethanolamine, and dipropanolamine. A substituted hydrocarbon may be different. This also applies to the tertiary amine. Examples of different substituted hydrocarbons include methylethylamine and methylpropylamine. The tertiary amine includes trimethylamine, triethylamine, tripropylamine, tributylamine, trihexylamine, trimethanolamine, triethanolamine, tripropanolamine, tributanolamine, tripropanolamine, triexanolamine, methyldiethylamine, and methyldipropylamine. The reduction reaction solution 506 contains CO₂ absorbed by amine molecules and with which a reduction reaction occurs.

The reaction solution 506 contains H₂O with which an oxidation reaction occurs and CO₂ absorbed by amine molecules and with which a reduction reaction occurs. In the present embodiment, an oxidation reaction and a reduction reaction occur on the surface of the oxidation reaction portion 503 and the reduction reaction portion 505 respectively. Therefore, it is desirable to electrically connect the oxidation reaction portion 503 and the reduction reaction portion 505 to exchange electrons or holes therebetween. For this purpose, a redox couple may be added to the reaction solution 506 when necessary. The redox couple is, for example, Fe³⁺/Fe²⁺, IO³⁻/I⁻ and the like.

The oxidation reaction portion 503 is configured in the same manner as the oxidation reaction portion 303 in the third embodiment. That is, the oxidation reaction portion 503 includes an oxidation reaction semiconductor photocatalyst excited by light energy to separate charges and an oxidation reaction co-catalyst to promote an oxidation reaction.

The reduction reaction portion 505 is configured in the same manner as the reduction reaction portion 305 in the third embodiment. That is, the reduction reaction portion 505 includes a reduction reaction semiconductor photocatalyst excited by light energy to separate charges and a reduction reaction co-catalyst to promote a reduction reaction.

The oxidation reaction portion 503 and the reduction reaction portion 505 are electrically connected via the power supply element 511. Accordingly, electrons and holes can be exchanged between the oxidation reaction portion 503 and the reduction reaction portion 505.

The power supply element (semiconductor element) 511 is arranged between the oxidation reaction portion 503 and the reduction reaction portion 505 and is formed in contact with each. In other words, the oxidation reaction portion 503 is formed on a first surface of the power supply element 511 and the reduction reaction portion 505 is formed on a second surface opposite to the first surface. That is, a laminated body is formed from the oxidation reaction portion 503, the power supply element 511, and the reduction reaction portion 505. Accordingly, the power supply element 511 is electrically connected directly to the oxidation reaction portion 503 and the reduction reaction portion 505 in an interface with the oxidation reaction portion 503 and the reduction reaction portion 505 respectively. The power supply element 511 is used to separate charges inside a material by light energy and is, for example, a pin junction, amorphous silicon solar cell, multi-junction solar cell, single crystal silicon solar cell, polycrystal silicon solar cell, dye sensitization solar cell, or organic thin film solar cell.

The power supply element 511 is installed as an auxiliary power supply when an oxidation reaction of H₂O and a reduction reaction of CO₂ are not smoothly caused simultaneously by a difference between the most positive standard photoexcited hole level and the most negative standard photoexcited electron level generated in the oxidation reaction portion 503 and the reduction reaction portion 505. Photoexcited holes generated inside the power supply element 511 can directly move to the oxidation reaction portion 503 and photoexcited electrons generated inside the power supply element 511 can directly move to the reduction reaction portion 505. That is, if the oxidation reaction portion 503 and/or the reduction reaction portion 505 is not sufficiently charge-separated, the energy necessary to cause an oxidation reaction of H₂O and a reduction reaction of CO₂ simultaneously is provided by the power supply element 511.

Depending on the material contained in the surface of the power supply element 511, an oxidation reaction of H₂O and a reduction reaction of CO₂ may occur. In such a case, an oxidation reaction or a reduction reaction may be caused by the power supply element 511 without forming the oxidation reaction portion 503 or the reduction reaction portion 505. In such a case, the oxidation reaction portion 503 or the reduction reaction portion 505 is defined as a portion of the power supply element 511.

When the power supply element 511 is provided, a case when there is no need for internal charge separation by absorbing light energy in the oxidation reaction portion 503 can be considered. In such a case, the oxidation reaction semiconductor photocatalyst is not formed and the oxidation reaction portion 503 is configured only by the oxidation reaction co-catalyst.

Similarly, when the power supply element 511 is provided, a case when there is no need for internal charge separation by absorbing light energy in the reduction reaction portion 505 can be considered. In such a case, the reduction reaction semiconductor photocatalyst is not formed and the reduction reaction portion 505 is configured only by the reduction reaction co-catalyst.

The thin film 504 covers the surface (exposed surface) of the oxidation reaction portion 503. The exposed surface of the oxidation reaction portion 503 is a surface on the opposite side of the surface on which the power supply element 511 is formed in the oxidation reaction portion 503. In other words, the thin film 504 is arranged between the oxidation reaction portion 503 and the reaction solution 506 and the oxidation reaction portion 503 is not in direct contact with the reaction solution 506. The thin film 504 has a channel size that allows H₂O molecules, O₂ molecules, and H⁺ to pass through and inhibits transmission of amine molecules. If a redox couple is contained in the oxidation reaction solution 506, the thin film 504 has a channel size that allows the redox couple to pass through. More specifically, the thin film 504 has a channel size of 0.3 nm or more and 1.0 nm or less. As the thin film 504, a thin film containing at least one of graphene oxide, graphene, polyimide, carbon nanotube, diamond-like carbon, and zeolite can be cited.

Accordingly, the thin film 504 inhibits amine molecules from passing from the reaction solution 506 to the oxidation reaction portion 503 so that an oxidation reaction of amine molecules by the oxidation reaction portion 503 can be prevented. On the other hand, the thin film 504 allows H₂O molecules to pass from the reaction solution 506 to the oxidation reaction portion 503 and also allows O₂ molecules and H⁺ to pass from the oxidation reaction portion 503 to the reaction solution 506 and thus, the oxidation reaction of H₂O by the oxidation reaction portion 503 is not inhibited. That is, the thin film 504 functions as an amine molecule sieving film that inhibits transmission of amine molecules.

Like the thin film 104 in the first embodiment, from the viewpoint of optical transparency and insulation properties, it is necessary to adjust the thickness of the thin film 504 when appropriate. When, for example, graphene oxide is used as the thin film 504, the thickness thereof is desirably set to 1 nm or more and 100 nm or less and more desirably 3 nm or more and 50 nm or less. From the viewpoint of optical transparency and insulation properties, these lower limits take insulation properties of graphene oxide into consideration and the upper limits take optical transparency into consideration.

### [Effect]

According to the fifth embodiment, a laminated body of the oxidation reaction portion 503, the power supply element 511, and the reduction reaction portion 505 is arranged in the identical reaction solution 506 and the thin film 504 that inhibits transmission of amine molecules is formed such as to cover the surface (exposed surface) of the oxidation reaction portion 503. Accordingly, an effect similar to that in the first embodiment can be achieved.

Also in the fifth embodiment, in addition to the oxidation reaction portion 503 and the reduction reaction portion 505, the power supply element 511 that separates charges by light energy is provided. The reaction efficiency of an oxidation reaction in the oxidation reaction portion 503 and a reduction reaction in the reduction reaction portion 505 can be made higher than in the third embodiment by the power supply element 511 being electrically connected directly to the oxidation reaction portion 503 and the reduction reaction portion 505.

### <Sixth Embodiment>

A photochemical reaction device according to the sixth embodiment will be described using FIGS. 13 to 15.

In the photochemical reaction device according to the sixth embodiment, a laminated body of an oxidation reaction portion 603, a power supply element 611, and a reduction reaction portion 605 is formed, the reduction reaction portion 605 is arranged in a reduction reaction solution 606b containing amine molecules, and the oxidation reaction portion 603 is arranged in an oxidation reaction solution 606a. Then, a diaphragm 607 containing a thin film that inhibits transmission of amine molecules is formed and a power supply element 611 is arranged between the oxidation reaction solution 606a and the reduction reaction solution 606b. Accordingly, oxidation of amine molecules by the oxidation reaction portion 603 can be prevented. The sixth embodiment will be described below.

In the sixth embodiment, the description mainly focuses on differences while omitting points similar to those in the above embodiments.

### [Configuration]

FIG. 13 is a sectional view showing the configuration of a photochemical reaction device according to the sixth embodiment.

As shown in FIG. 13, the photochemical reaction device according to the sixth embodiment includes an oxidation reaction tank 601a, a reduction reaction tank 601b, an oxygen collecting path 602a, a gaseous carbon compound collecting path 602b, the oxidation reaction portion 603, the diaphragm 607, the reduction reaction portion 605, the oxidation reaction solution 606a, the reduction reaction solution 606b, and the power supply element 611. Each element will be described in detail below.

The oxidation reaction tank 601a is a container to store the oxidation reaction solution 606a. The oxidation reaction tank 601a is connected to the oxygen collecting path 602a and discharges a generated gas to the outside through the oxygen collecting path 602a. The oxidation reaction tank 601a is desirably made fully sealed, excluding the oxygen collecting path 602a, to efficiently collect gaseous products.

To allow light to reach the inside of the oxidation reaction solution 606a, the reduction reaction portion 605, the oxidation reaction portion 603, and the power supply element 611, materials that absorb less light in the wavelength range of 250 nm or more and 1100 nm or less are desirable for the oxidation reaction tank 601a. Such materials include, for example, quartz, polystyrol, methacrylate, and white board glass. To allow a uniform and efficient reaction in the oxidation reaction tank 601a during a reaction (during an oxidation reaction), a stirrer may be provided in the oxidation reaction tank 601a to stir the oxidation reaction solution 606a.

The volume of the oxidation reaction solution 606a is less than 100% of the storage capacity of the oxidation reaction tank 601a, excluding the oxygen collecting path 602a, and preferably fills 50% to 90% thereof and particularly preferably 70% to 90% thereof. The oxidation reaction portion 603 and a portion of the power supply element 611 are impregnated with the oxidation reaction solution 606a. An oxidation reaction of H₂O occurs on the surface of the oxidation reaction portion 603.

The oxidation reaction solution 606a may be any solution that does not dissolve or corrode the oxidation reaction portion 603, the power supply element 611, and the diaphragm 607 and does not change the above elements in nature. Examples of such a solution include a sulfuric acid solution, a sulfate solution, a phosphoric acid solution, a phosphate solution, a boric acid solution, a borate solution, and a hydroxide salt solution. The oxidation reaction solution 606a contains H₂O to which an oxidation reaction occurs.

The reduction reaction tank 601b is a container to store the reduction reaction solution 606b. If the substance generated by reducing CO₂ is a gas, the reduction reaction tank 601b is connected to the gaseous carbon compound collecting path 602b and discharges a generated gas to the outside through the gaseous carbon compound collecting path 602b. The reduction reaction tank 601b is desirably made fully sealed, excluding the gaseous carbon compound collecting path 602b, to efficiently collect gaseous products. On the other hand, if the substance generated by reducing CO₂ is not a gas, the reduction reaction tank 601b may not be connected to the gaseous carbon compound collecting path 602b. In such a case, the reduction reaction tank 601b and the oxidation reaction tank 601a are fully sealed, excluding the oxygen collecting path 602a.

To allow light to reach the reduction reaction solution 606b and the surface of the reduction reaction portion 605, materials that absorb less light in the wavelength range of 250 nm or more and 1100 nm or less are desirable for the reduction reaction tank 601b. Such materials include, for example, quartz, polystyrol, methacrylate, and white board glass. To allow a uniform and efficient reaction in the reduction reaction tank 601b during a reaction (during a reduction reaction), a stirrer may be provided in the reduction reaction tank 601b to stir the reduction reaction solution 606b.

If the substance generated by reducing CO₂ is a gas, the volume of the reduction reaction solution 606b is less than 100% of the storage capacity of the reduction reaction tank 601b, excluding the gaseous carbon compound collecting path 602b, and preferably fills 50% to 90% thereof and particularly preferably 70% to 90% thereof. On the other hand, if the substance generated by reducing CO₂ is not a gas, the reduction reaction solution 606b desirably fills 100% of the storage capacity of the reduction reaction tank 601b and fills at least 90% thereof. The reduction reaction portion 605 and the other portion of the power supply element 611 are impregnated with the reduction reaction solution 606b. A reduction reaction of CO₂ occurs on the surface of the reduction reaction portion 605.

The reduction reaction solution 606b may be any solution containing amine molecules that does not dissolve or corrode the reduction reaction portion 605, the diaphragm 607, and the power supply element 611 and does not change the above elements in nature. As such a solution, for example, an amine solution of ethanolamine, imidazole, or pyridine can be cited. The amine may be one of a primary amine, secondary amine, and tertiary amine. The primary amine includes methylamine, ethylamine, propylamine, butylamine, pentylamine, and hexylamine. A hydrocarbon of amine may be substituted by an alcohol, halogen or the like. Examples of an amine in which a hydrocarbon is substituted include methanolamine, ethanolamine, and chloromethylamine. Unsaturated bonding may be present in the amine. Such a hydrocarbon is similar in the secondary amine and tertiary amine. The secondary amine includes dimethylamine, diethylamine, dipropylamine, dibutylamine, dipentylamine, dihexylamine, dimethanolamine, diethanolamine, and dipropanolamine. A substituted hydrocarbon may be different. This also applies to the tertiary amine. Examples of different substituted hydrocarbons include methylethylamine and methylpropylamine. The tertiary amine includes trimethylamine, triethylamine, tripropylamine, tributylamine, trihexylamine, trimethanolamine, triethanolamine, tripropanolamine, tributanolamine, tripropanolamine, triexanolamine, methyldiethylamine, and methyldipropylamine. The reduction reaction solution 606b contains CO₂ absorbed by amine molecules and with which a reduction reaction occurs.

The oxidation reaction tank 601a and the reduction reaction tank 601b are separated by the diaphragm 607 and the power supply element 611. In other words, the oxidation reaction solution 606a and the reduction reaction solution 606b are physically separated by the diaphragm 607 and the power supply element 611. The interface (diaphragm 607) between the oxidation reaction tank 601a and the reduction reaction tank 601b is positioned between the contact surface of the power supply element 611 with the oxidation reaction portion 603 and the contact surface of the power supply element 611 with the reduction reaction portion 605. In other words, a portion on the oxidation reaction portion 603 side of the power supply element 611 is impregnated with the oxidation reaction solution 606a and a portion (the other portion) on the reduction reaction portion 605 side of the power supply element 611 is impregnated with the reduction reaction solution 606b.

In the present embodiment, an oxidation reaction and a reduction reaction occur on the surface of the oxidation reaction portion 603 and the reduction reaction portion 605 respectively. Thus, the oxidation reaction portion 603 and the reduction reaction portion 605 are desirably connected electrically to exchange electrons and holes therebetween. For this purpose, a redox couple may be added to the oxidation reaction solution 606a and the reduction reaction solution 606b when necessary. The redox couple is, for example, Fe³⁺/Fe²⁺, IO³⁻/I⁻ and the like.

The oxidation reaction portion 603 is configured in the same manner as the oxidation reaction portion 303 in the third embodiment. That is, the oxidation reaction portion 603 includes an oxidation reaction semiconductor photocatalyst excited by light energy to separate charges and an oxidation reaction co-catalyst to promote an oxidation reaction.

The reduction reaction portion 605 is configured in the same manner as the reduction reaction portion 305 in the third embodiment. That is, the reduction reaction portion 605 includes a reduction reaction semiconductor photocatalyst excited by light energy to separate charges and a reduction reaction co-catalyst to promote a reduction reaction.

The oxidation reaction portion 603 and the reduction reaction portion 605 are electrically connected via the power supply element 511. Accordingly, electrons and holes can be exchanged between the oxidation reaction portion 603 and the reduction reaction portion 605.

The power supply element (semiconductor element) 611 is arranged between the oxidation reaction portion 603 and the reduction reaction portion 605 and is formed in contact with each. In other words, the oxidation reaction portion 603 is formed on a first surface of the power supply element 611 and the reduction reaction portion 605 is formed on a second surface opposite to the first surface. That is, a laminated body is formed from the oxidation reaction portion 603, the power supply element 611, and the reduction reaction portion 605. Accordingly, the power supply element 611 is electrically connected directly to the oxidation reaction portion 603 and the reduction reaction portion 605 in an interface with the oxidation reaction portion 603 and the reduction reaction portion 605 respectively. The power supply element 611 is used to separate charges inside a material by light energy and is, for example, a pin junction, amorphous silicon solar cell, multi-junction solar cell, single crystal silicon solar cell, polycrystal silicon solar cell, dye sensitization solar cell, or organic thin film solar cell.

The power supply element 611 is installed as an auxiliary power supply when an oxidation reaction of H₂O and a reduction reaction of CO₂ are not smoothly caused simultaneously by a difference between the most positive standard photoexcited hole level and the most negative standard photoexcited electron level generated in the oxidation reaction portion 603 and the reduction reaction portion 605. Photoexcited holes generated inside the power supply element 611 can directly move to the oxidation reaction portion 603 and photoexcited electrons generated inside the power supply element 611 can directly move to the reduction reaction portion 605. That is, if the oxidation reaction portion 603 and/or the reduction reaction portion 605 is not sufficiently charge-separated, the energy necessary to cause an oxidation reaction of H₂O and a reduction reaction of CO₂ simultaneously is provided by the power supply element 611.

Depending on the material contained in the surface of the power supply element 611, an oxidation reaction of H₂O or a reduction reaction of CO₂ may occur. In such a case, an oxidation reaction or a reduction reaction may be caused by the power supply element 611 without forming the oxidation reaction portion 603 or the reduction reaction portion 605. In such a case, the oxidation reaction portion 603 or the reduction reaction portion 605 is defined as a portion of the power supply element 611.

When the power supply element 611 is provided, a case when there is no need for internal charge separation by absorbing light energy in the oxidation reaction portion 603 can be considered. In such a case, the oxidation reaction semiconductor photocatalyst is not formed and the oxidation reaction portion 603 is configured only by the oxidation reaction co-catalyst.

Similarly, when the power supply element 611 is provided, a case when there is no need for internal charge separation by absorbing light energy in the reduction reaction portion 605 can be considered. In such a case, the reduction reaction semiconductor photocatalyst is not formed and the reduction reaction portion 605 is configured only by the reduction reaction co-catalyst.

The diaphragm 607 is arranged between the oxidation reaction tank 601a and the reduction reaction tank 601b. That is, the diaphragm 607 is arranged between the oxidation reaction solution 606a and the reduction reaction solution 606b to physically separate these solutions. In other words, the diaphragm 607 is arranged between the oxidation reaction portion 603 and the reduction reaction solution 606b and the oxidation reaction portion 603 is not in direct contact with the reduction reaction solution 606b. The diaphragm 607 is positioned between the contact surface of the power supply element 611 with the oxidation reaction portion 603 and the contact surface of the power supply element 611 with the reduction reaction portion 605.

The diaphragm 607 is configured in the same manner as the diaphragm 207 in the second embodiment. That is, the diaphragm 607 is configured as a laminated film of a thin film that inhibits transmission of amine molecules and a support film that allows only a specific substance contained in the oxidation reaction solution 606a and a specific substance contained in the reduction reaction solution 606b to selectively pass through. The thin film has a channel size that allows H₂O molecules, O₂ molecules, and H⁺ to pass through and inhibits transmission of amine molecules. If a redox couple is contained in the oxidation reaction solution 406a and the reduction reaction solution 406b, the thin film has a channel size that allows the redox couple to pass through. More specifically, the thin film has a channel size of 0.3 nm or more and 1.0 nm or less. As such a thin film, a thin film containing at least one of graphene oxide, graphene, polyimide, carbon nanotube, diamond-like carbon, and zeolite can be cited.

A case when selective transmission of a specific substance contained in the oxidation reaction solution 606a and a specific substance contained in the reduction reaction solution 606b can be achieved by the thin film only. In such a case, the diaphragm 607 includes only the thin film. Further, if the oxidation reaction solution 606a and the reduction reaction solution 606b are physically separated, transmission of amine molecules is inhibited, a specific substance is selectively allowed to pass through, and sufficient mechanical strength is possessed, the order of stacking the support film and the thin film in the diaphragm 607 does not matter.

Also, like the diaphragm 207 in the second embodiment, the thin film in the diaphragm 607 is not involved in light reaching the oxidation reaction portion 603 and the reduction reaction portion 605 and is not in direct contact with the oxidation reaction portion 603 and thus, there is no limitation in the design concerning optical transparency and insulation properties.

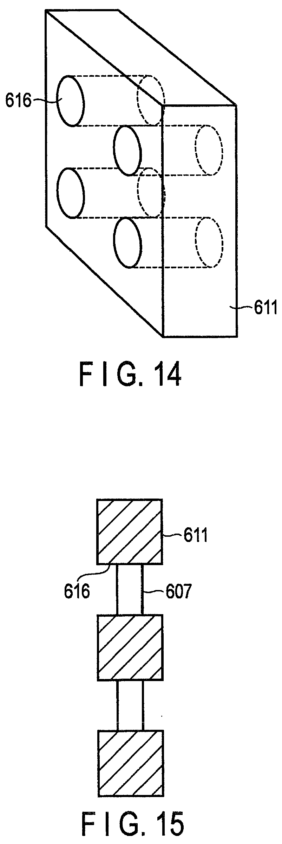

FIG. 14 is a perspective view showing the configuration of an example of the power supply element 611 according to the sixth embodiment and FIG. 15 is a sectional view showing the configuration of an example of the power supply element 611 according to the sixth embodiment.

As shown in FIGS. 14 and 15, in the power supply element 611 according to the sixth embodiment, a through hole 616 can be provided. The through hole 616 penetrates from the contact surface of the power supply element 611 with the oxidation reaction portion 603 to the contact surface of the power supply element 611 with the reduction reaction portion 605. In addition, the diaphragm 607 is provided inside the through hole 617. Accordingly, the oxidation reaction solution 606a and the reduction reaction solution 606b are separated also inside the through hole 617.

### [Effect]

According to the sixth embodiment, a laminated body of the oxidation reaction portion 603, the power supply element 611, and the reduction reaction portion 605 is formed, the reduction reaction portion 605 is arranged in the reduction reaction solution 606b containing amine molecules, and the oxidation reaction portion 603 is arranged in the oxidation reaction solution 606a. Then, the diaphragm 607 containing a thin film that inhibits transmission of amine molecules is formed and a power supply element 611 is arranged between the oxidation reaction solution 606a and the reduction reaction solution 606b. Accordingly, an effect similar to that in the first embodiment can be achieved.

Also in the sixth embodiment, in addition to the oxidation reaction portion 603 and the reduction reaction portion 605, the power supply element 611 that separates charges by light energy is provided. Accordingly, an effect similar to that in the fifth embodiment can be gained.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

### Reference Signs List

- 103, 203: Oxidation reaction particle
- 303, 503, 603: Oxidation reaction portion
- 103a, 303a: Oxidation reaction semiconductor photocatalyst
- 103b, 303b: Oxidation reaction co-catalyst
- 104, 204, 304, 504: Thin film
- 105, 205: Reduction reaction particle
- 305, 505, 605: Reduction reaction portion
- 105a, 305a: Reduction reaction semiconductor photocatalyst
- 105b, 305b: Reduction reaction co-catalyst
- 106, 306, 506: Reaction solution
- 206a, 406a, 606a: Oxidation reaction solution
- 206b, 406b, 606b: Reduction reaction solution
- 311, 411, 511, 611: Power supply element
- 312, 412: Oxidation-side electric connection portion
- 313, 413: Reduction-side electric connection portion
- 309, 409: Oxidation electrode
- 310, 410: Reduction electrode
- 102, 302, 502: Gas collecting path
- 202a, 402a, 602a: Oxygen collecting path
- 202b, 402b, 602b: Gaseous carbon compound collecting path
- 218, 418: Joint
- 101, 301, 501: Reaction tank
- 201a, 401a, 601a: Oxidation reaction tank
- 201b, 401b, 601b: Reduction reaction tank
- 207, 407, 607: Diaphragm
- 208: Support film
- 314: Oxidation electrode support substrate
- 315: Reduction electrode support substrate
- 616: Through hole

## Claims

1. A photochemical reaction device comprising:
an oxidation reaction portion that generates oxygen by oxidizing water;
a reduction reaction portion that generates a carbon compound by reducing carbon dioxide and is arranged in a first solution containing amine molecules in which the carbon dioxide is absorbed;
a semiconductor element that separates charges by light energy and is electrically connected to the oxidation reaction portion and the reduction reaction portion; and
a thin film formed between the oxidation reaction portion and the first solution to inhibit transmission of the amine molecules from the first solution to the oxidation reaction portion.

2. The photochemical reaction device of claim 1,
wherein the thin film allows water molecules, oxygen molecules, and hydrogen ions to pass through.

3. The photochemical reaction device of claim 1,
wherein the thin film contains carbon and/or a silicon compound.

4. The photochemical reaction device of claim 1,
wherein the thin film contains at least one of graphene oxide, graphene, polyimide, carbon nanotube, diamond-like carbon, and zeolite.

5. The photochemical reaction device of claim 1,
wherein a channel size of the thin film is 0.3 nm or more and 1.0 nm or less.

6. The photochemical reaction device of claim 1,
wherein the semiconductor element is electrically connected to the oxidation reaction portion and the reduction reaction portion via a wire.

7. The photochemical reaction device of claim 1,
wherein the semiconductor element is formed between the oxidation reaction portion and the reduction reaction portion in contact and is electrically connected directly to the oxidation reaction portion and the reduction reaction portion.

8. The photochemical reaction device of claim 1,
wherein the first solution contains the water, the oxidation reaction portion is arranged in the first solution, and the thin film is formed on a surface of the oxidation reaction portion.

9. The photochemical reaction device of claim 1,
wherein the oxidation reaction portion is arranged in a second solution separate from the first solution and containing the water and the thin film is formed between the first solution and the second solution.

10. A photochemical reaction device comprising:
an oxidation reaction portion that contains an oxidation reaction semiconductor photocatalyst to separate charges by light energy and generates oxygen by oxidizing water;
a reduction reaction portion that contains a reduction reaction semiconductor photocatalyst to separate charges by the light energy, is arranged in a first solution containing amine molecules in which carbon dioxide is absorbed, and generates a carbon compound by reducing the carbon dioxide; and
a thin film formed between the oxidation reaction portion and the first solution to inhibit transmission of the amine molecules from the first solution to the oxidation reaction portion.

11. The photochemical reaction device of claim 10,
wherein the thin film allows water molecules, oxygen molecules, and hydrogen ions to pass through.

12. The photochemical reaction device of claim 10,
wherein the thin film contains carbon and/or a silicon compound.

13. The photochemical reaction device of claim 10,
wherein the thin film contains at least one of graphene oxide, graphene, polyimide, carbon nanotube, diamond-like carbon, and zeolite.

14. The photochemical reaction device of claim 10,
wherein a channel size of the thin film is 0.3 nm or more and 1.0 nm or less.

15. The photochemical reaction device of claim 10,
wherein the first solution contains the water, the oxidation reaction portion is arranged in the first solution, and the thin film is formed on a surface of the oxidation reaction portion.

16. The photochemical reaction device of claim 10,
wherein the oxidation reaction portion is arranged in a second solution separate from the first solution and containing the water and the thin film is formed between the first solution and the second solution.

17. The photochemical reaction device of claim 10,
wherein the oxidation reaction portion is formed on a surface of the oxidation reaction semiconductor photocatalyst and further includes an oxidation reaction co-catalyst to promote an oxidation reaction and the reduction reaction portion is formed on the surface of the reduction reaction semiconductor photocatalyst and further includes a reduction reaction co-catalyst to promote a reduction reaction.

18. A thin film, wherein transmission of amine molecules to an oxidation reaction portion that generates oxygen by oxidizing water from a first solution containing the amine molecules in which carbon dioxide is absorbed is inhibited.

19. The thin film of claim 18, wherein water molecules, oxygen molecules, and hydrogen ions are allowed to pass through.

20. The thin film of claim 18, wherein carbon and/or a silicon compound is contained.

## Amended claims

### Amended claims under Art. 19.1 PCT

**1.** A photochemical reaction device comprising:
an oxidation reaction portion that generates oxygen by oxidizing water;
a reduction reaction portion that generates a carbon compound by reducing carbon dioxide and is arranged in a first solution containing amine molecules in which the carbon dioxide is absorbed;
a semiconductor element that separates charges by light energy and is electrically connected to the oxidation reaction portion and the reduction reaction portion; and
a thin film formed between the oxidation reaction portion and the first solution to inhibit transmission of the amine molecules from the first solution to the oxidation reaction portion.

**2.** The photochemical reaction device of claim 1,
wherein the thin film allows water molecules, oxygen molecules, and hydrogen ions to pass through.

**3.** The photochemical reaction device of claim 1,
wherein the thin film contains carbon and/or a silicon compound.

**4.** The photochemical reaction device of claim 1,
wherein the thin film contains at least one of graphene oxide, graphene, polyimide, carbon nanotube, diamond-like carbon, and zeolite.

**5.** The photochemical reaction device of claim 1,
wherein a channel size of the thin film is 0.3 nm or more and 1.0 nm or less.

**6.** The photochemical reaction device of claim 1,
wherein the semiconductor element is electrically connected to the oxidation reaction portion and the reduction reaction portion via a wire.

**7.** The photochemical reaction device of claim 1,
wherein the semiconductor element is formed between the oxidation reaction portion and the reduction reaction portion in contact and is electrically connected directly to the oxidation reaction portion and the reduction reaction portion.

**8.** The photochemical reaction device of claim 1,
wherein the first solution contains the water, the oxidation reaction portion is arranged in the first solution, and the thin film is formed on a surface of the oxidation reaction portion.

**9.** The photochemical reaction device of claim 1,
wherein the oxidation reaction portion is arranged in a second solution separate from the first solution and containing the water and the thin film is formed between the first solution and the second solution.

**10.** A photochemical reaction device comprising:
an oxidation reaction portion that contains an oxidation reaction semiconductor photocatalyst to separate charges by light energy and generates oxygen by oxidizing water;
a reduction reaction portion that contains a reduction reaction semiconductor photocatalyst to separate charges by the light energy, is arranged in a first solution containing amine molecules in which carbon dioxide is absorbed, and generates a carbon compound by reducing the carbon dioxide; and
a thin film formed between the oxidation reaction portion and the first solution to inhibit transmission of the amine molecules from the first solution to the oxidation reaction portion.

**11.** The photochemical reaction device of claim 10,
wherein the thin film allows water molecules, oxygen molecules, and hydrogen ions to pass through.

**12.** The photochemical reaction device of claim 10,
wherein the thin film contains carbon and/or a silicon compound.

**13.** The photochemical reaction device of claim 10,
wherein the thin film contains at least one of graphene oxide, graphene, polyimide, carbon nanotube, diamond-like carbon, and zeolite.

**14.** The photochemical reaction device of claim 10,
wherein a channel size of the thin film is 0.3 nm or more and 1.0 nm or less.

**15.** The photochemical reaction device of claim 10,
wherein the first solution contains the water, the oxidation reaction portion is arranged in the first solution, and the thin film is formed on a surface of the oxidation reaction portion.

**16.** The photochemical reaction device of claim 10,
wherein the oxidation reaction portion is arranged in a second solution separate from the first solution and containing the water and the thin film is formed between the first solution and the second solution.

**17.** The photochemical reaction device of claim 10,
wherein the oxidation reaction portion is formed on a surface of the oxidation reaction semiconductor photocatalyst and further includes an oxidation reaction cocatalyst to promote an oxidation reaction and the reduction reaction portion is formed on the surface of the reduction reaction semiconductor photocatalyst and further includes a reduction reaction cocatalyst to promote a reduction reaction.

**18.** A thin film, wherein transmission of amine molecules to an oxidation reaction portion that generates oxygen by oxidizing water from a first solution containing the amine molecules in which carbon dioxide is absorbed is inhibited.

**19.** The thin film of claim 18, wherein water molecules, oxygen molecules, and hydrogen ions are allowed to pass through.

**20.** The thin film of claim 18, wherein carbon and/or a silicon compound is contained.

**21.** Added)
The photochemical reaction device of claim 1, wherein the thin film contains at least one of graphene oxide, graphene, polyimide, and carbon nanotube.

**22.** Added)
The photochemical reaction device of claim 1, wherein the thin film contains graphene oxide having a thickness of 1 nm or more and 100 nm or less.

**23.** Added)
The photochemical reaction device of claim 10, wherein the thin film contains at least one of graphene oxide, graphene, polyimide, and carbon nanotube.

**24.** Added)
The photochemical reaction device of claim 10, wherein the thin film contains graphene oxide having a thickness of 1 nm or more and 100 nm or less.
